# EUROPEAN PATENT APPLICATION

(11) **EP 4 700 530 A1**
(43) Date of publication of application: **25.02.2026**
(21) Application number: 24797348.0
(22) Date of filing: 18.04.2024
(51) Int. Cl.: G06F 1/16

(54) **DISPLAY DEVICE**

(30) Priority: 25.04.2023 KR 20230054068; 11.10.2023 KR 20230135081
(71) Applicant: LG Electronics Inc., Yeongdeungpo-gu Seoul 07336 (KR)
(72) Inventor: KIM, Chulki, Seoul 06772 (KR)
(74) Representative: Schornack, Oliver
(86) International application number: PCT/KR2024/005260
(87) International publication number: WO 2024/225692

(57) **Abstract**

Disclosed is a display device. The display device of the present disclosure may include: a bottom case which accommodates a display panel; a top case which opens or closes the bottom case; and a locking unit which is pivotally connected to the bottom case, and which includes a lock lever engaged with or disengaged from the top case, in which the locking unit may include a cam which provides a pivot axis of the lock lever at between the bottom case and the lock lever, which extends in a radial direction of the pivot axis, and which is in contact with the bottom case, in which the cam may include: a first surface which is located between the pivot axis and the top case, and which forms a curved surface; a second surface which is opposite to the first surface with respect to the pivot axis, and which forms a straight surface; and a third surface which is located between the first surface and the second surface, which forms a curved surface from the second surface, and which forms a step raised with respect to the first surface.

## Description

### TECHNICAL FIELD

The present description relates to a display device.

### BACKGROUND ART

As information society develops, the demand for display devices is also increasing in various forms. In response to this, various display devices such as Liquid Crystal Display Device (LCD), Plasma Display Panel (PDP), Electroluminescent Display (ELD), Vacuum Fluorescent Display (VFD), and Organic Light Emitting Diode (OLED) have been researched and used in recent years.

Among these, a liquid crystal panel includes a TFT substrate and a color filter substrate that face each other with a liquid crystal layer interposed therebetween, and may display an image by using light provided from a backlight unit. In addition, an OLED panel may display an image by depositing an organic material layer capable of self-emitting light on a substrate on which a transparent electrode is formed.

Recently, much research has been conducted on display devices that can be used outdoors. In addition, much research has been conducted on structures that improve the storage and portability of display devices.

### DETAILED DESCRIPTION OF INVENTION

### TECHNICAL PROBLEMS

It is an objective of the present disclosure to solve the above-described problems and other problems.

Another object may be to provide a structure that allows a display device to be easily stored and carried.

Another object may be to provide a structure that can improve the durability and rigidity of a portable display device.

Another object may be to provide a heat dissipation structure for a portable display device.

Another object may be to provide a shock absorbing structure for a portable display device.

Another object may be to provide a locking structure for a portable display device.

Another object may be to provide a locking structure for a portable display device having improved usability.

Another object may be to provide a portable display device having a reduced opening and closing angle of a locking structure.

Another object may be to provide a locking structure for a display device having improved durability.

### TECHNICAL SOLUTION

In accordance with an aspect of the present disclosure for achieving the above and other objects, a display device may include: a bottom case which accommodates a display panel; a top case which opens or closes the bottom case; and a locking unit which is pivotally connected to the bottom case, and which includes a lock lever engaged with or disengaged from the top case, in which the locking unit may include a cam which provides a pivot axis of the lock lever between the bottom case and the lock lever, which extends in a radial direction of the pivot axis, and which is in contact with the bottom case, in which the cam may include: a first surface which is located between the pivot axis and the top case, and which forms a curved surface; a second surface which is opposite to the first surface with respect to the pivot axis, and which forms a straight surface; and a third surface which is located between the first surface and the second surface, which forms a curved surface from the second surface, and which forms a step raised with respect to the first surface.

### EFFECT OF INVENTION

The effects of the display device according to the present disclosure will be described as follows.

According to at least one of the embodiments of the present disclosure, there may be provided a structure that can easily store and carry a display device.

According to at least one of the embodiments of the present disclosure, there may be provided a structure that can improve the durability and rigidity of a portable display device.

According to at least one of the embodiments of the present disclosure, there may be provided a heat dissipation structure for a portable display device.

According to at least one of the embodiments of the present disclosure, there may be provided a shock absorption structure for a portable display device.

According to at least one of the embodiments of the present disclosure, there may be provided a locking structure for a display device which can distinguish between an unlocking operation and a locking operation by including a third surface which protrudes in a direction opposite to a lock lever with respect to a pivot axis and is formed as a curved surface, and a second surface extending from the third surface to form a straight surface.

According to at least one of the embodiments of the present disclosure, a second surface forming a closing ramp of cam is formed as a straight surface, so that the ability to hold the unlocked state of locking structure can be improved. In addition, the adhesion between a locking unit and a case is improved, so that vibration and unnecessary movement of a locking lever can be reduced.

According to at least one of the embodiments of the present disclosure, the phenomenon of locking unit being rotated beyond a designed pivot angle can be minimized by including a concave portion formed in a cam and a corresponding stopper. Through this, it is possible to provide a locking structure for a display device having improved durability.

According to at least one of the embodiments of the present disclosure, a cam includes a fourth surface whose distance from a pivot axis increases as it moves away from a second surface, which is a closing ramp, thereby minimizing a phenomenon in which an unlocked locking unit rotates beyond a design angle. Through this, it is possible to provide a locking structure for a display device having improved durability.

According to at least one of the embodiments of the present disclosure, a cam is formed in such a manner that the distance between a locking point and a pivot axis is longer than the distance between an unlocking point and the pivot axis, thereby reducing a ramp height difference between the locking point and a nose. Through this, the driving force applied by a user to unlock a locking unit can be reduced. A user can easily and quickly unlock the locking unit.

According to at least one of the embodiments of the present disclosure, the ramp height of a third surface gradually becomes smaller as it moves from a nose to a locking point, so that the locking holding force of locking unit can be formed.

According to at least one of the embodiments of the present disclosure, the curvature of protruding surface of a third surface is formed to be greater than the curvature of nose surface of the third surface, so that the locking holding power of locking unit can be improved.

Further scope of applicability of the present disclosure will become apparent from the following detailed description. However, it should be understood that the detailed description and specific embodiments such as preferred embodiments of the present disclosure are given by way of illustration only, since various changes and modifications within the spirit and scope of the present disclosure may be clearly understood by those skilled in the art.

### BRIEF DESCRIPTION OF THE DRAWING

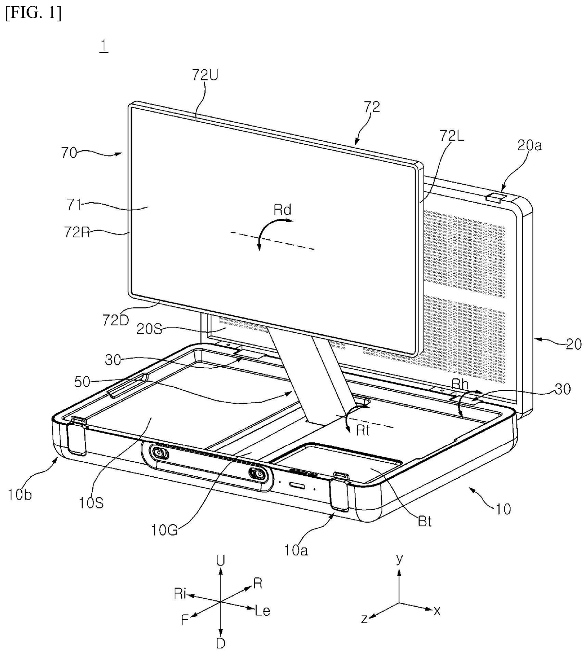

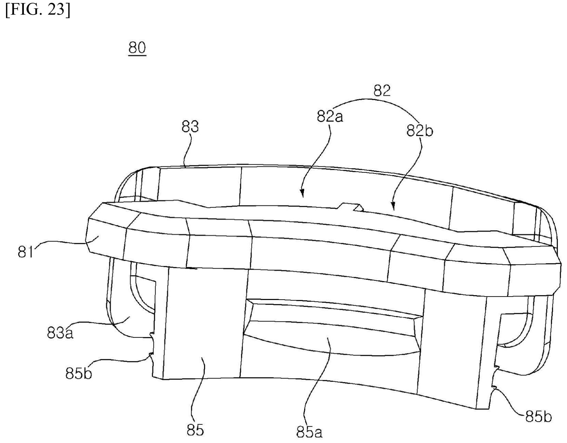

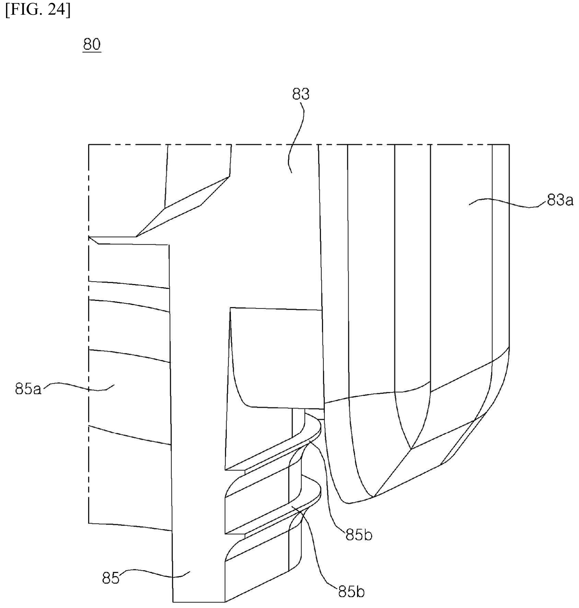

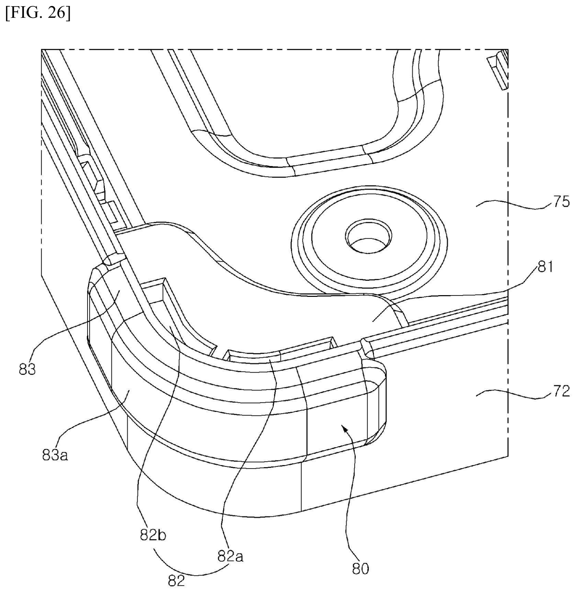

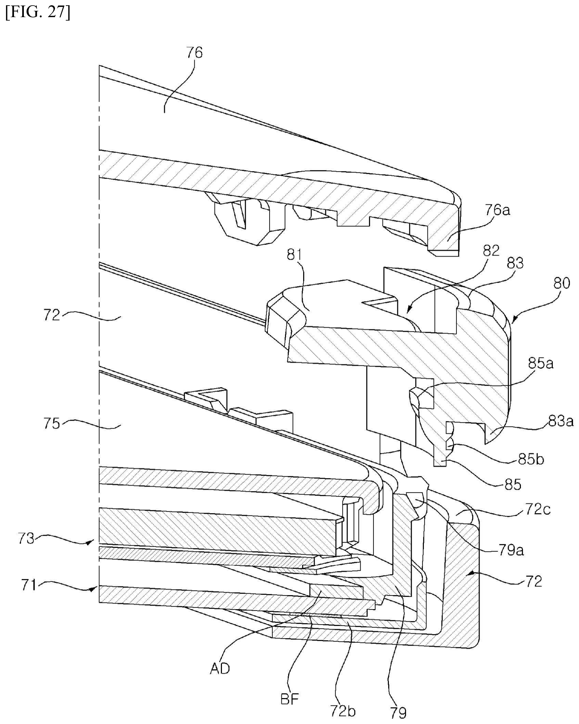

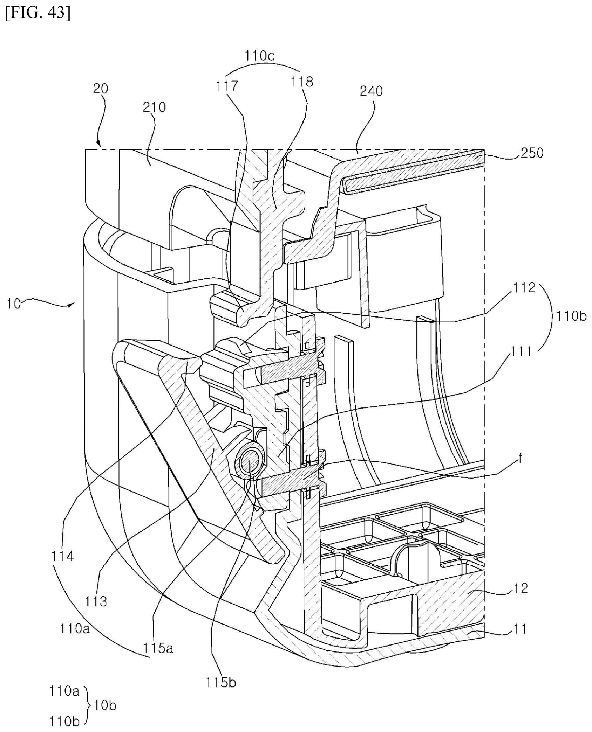

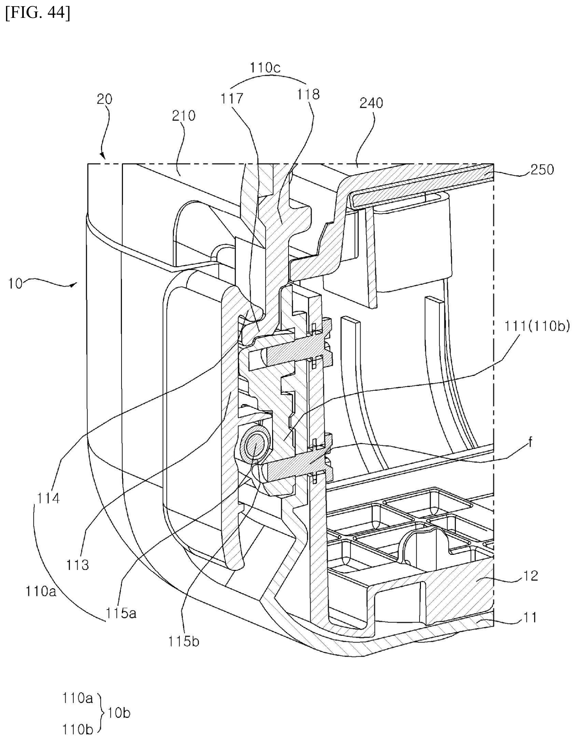

FIGS. 1 to 52 are diagrams illustrating examples of a display device according to embodiments of the present disclosure.

### MODE FOR CARRYING OUT THE INVENTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

Direction indications of up (U), down (D), left (Le), right (Ri), front (F), and rear (R) shown in the drawings are only for convenience of explanation, and the technical concept disclosed in this specification is not limited thereto.

The display panel of the present disclosure may be an LCD panel or an OLED panel, but the type of display panel applicable to the present disclosure is not limited thereto.

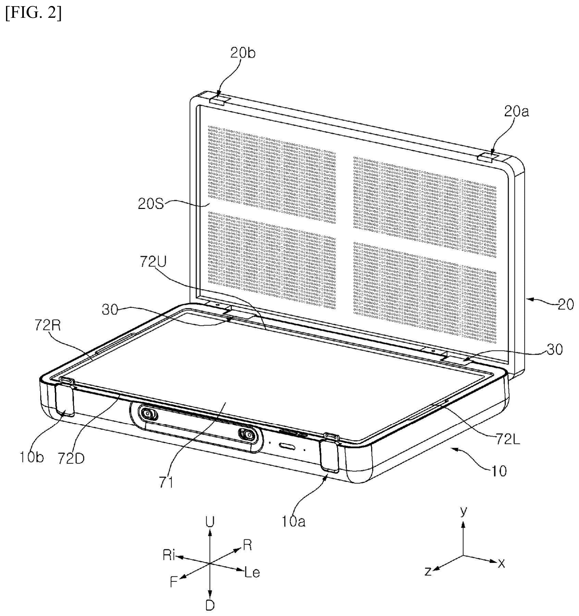

Referring to FIGS. 1 and 2, the display 70 may include a base 10, a cover 20, a hinge 30, an arm 50, and a display 70.

The base 10 may have an overall flat box shape. A seating portion 10S may be formed by being recessed downward from the upper surface of the base 10. The size of the seating portion 10S may correspond to the size of the display 70. For example, the base 10 may include a plastic material. The base 10 may be referred to as a lower body 10, a lower case 10, a lower housing 10, a bottom box 10, a bottom cabinet 10, or a bottom case 10.

The cover 20 may have an overall flat box shape. The outer shape of the cover 20 may resemble that of the base 10. A recessed portion 20S may be formed on one surface of the cover 20 and may be opposite to the seating portion 10S with respect to the display 70. For example, the cover 20 may include a plastic material. The cover 20 may be referred to as an upper body 20, an upper case 20, an upper housing 20, a top box 20, a top cabinet 20, or a top case 20.

One side of the hinge 30 may be adjacent to or located on one side of the base 10, may be coupled to the base 10, and may rotate about the central axis of the hinge 30. The other side of the hinge 30 may be adjacent to or located on one side of the cover 20, may be coupled to the cover 20, and may rotate about the central axis of the hinge 30. The one side of the base 10 may be one long side of the base 10, and the one side of the cover 20 may be one long side of the cover 20 adjacent to the one long side of the base 10. For example, a plurality of hinges 30 may be spaced apart from each other along the one long side. The number of hinges 30 may be two.

The arm 50 may extend in a direction intersecting the base 10. The arm 50 may have an overall square lumber shape. A groove 10G may be formed by being recessed downward from the seating portion 10S and may have a shape corresponding to the arm 50. One end of the arm 50 may be located on the groove 10G while being adjacent to one end of the groove 10G. The arm 50 may be rotatably coupled to the base 10 about a first axis adjacent to the one end of the arm 50 (see Rt in FIG. 1). The first axis may be parallel to the left-right direction. The other end of the arm 50 may be coupled to the central portion of the rear surface of the display 70. The display 70 may be rotatably coupled to the arm 50 about a second axis adjacent to the other end of the arm 50 (see Rd in FIG. 1). The second axis may be parallel to the first axis. The arm 50 may be referred to as a pole 50, a bar 50, or a lever 50.

The display 70 may include a display panel 71 and a side cover 72. The display panel 71 may define the front surface of the display 70 and display an image. The side cover 72 may extend along the circumference of the display panel 71 and cover the side surface of the display panel 71. A first part 72U may define the upper side of the side cover 72, and a second part 72D may define the lower side of the side cover 72. A third part 72L may define the left side of the side cover 72, and a fourth part 72R may define the right side of the side cover 72. The display 70 may be referred to as a display unit 70 or a display module 70.

For example, a user may pivot the arm 50 about the first axis. When the arm 50 pivots, the location of the other end of the arm 50 may be raised. A user may rotate the display 70 about the second axis so that the display panel 71 faces forward. A user may adjust the angle of the arm 50 with respect to the base 10 and the angle of the display 70 with respect to the arm 50.

For another example, a user may pivot the arm 50 about the first axis. When the arm 50 reverse pivots, the location of the other end of the arm 50 may be lowered. In addition, the arm 50 may be seated on the groove 10G. A user may rotate the display 70 about the second axis so that the display panel 71 faces upward.

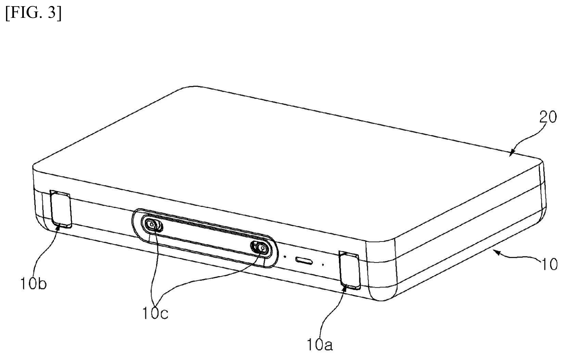

Referring to FIGS. 2 and 3, a user may pivot the cover 20 about the central axis of the hinge 30 so that the cover 20 is overlapped over the base 10. The display panel 71 may be sandwiched between the base 10 and the cover 20.

A lock 10a, 10b of the base 10 may be provided on the other side of the base 10 which is opposite to one side of the base 10 adjacent to the hinge 30. The lock 10a, 10b may be referred to as a lock assembly 10a, 10b or a locking unit 10a, 10b. A recessed portion 20a, 20b of the cover 20 may be provided on the other side of the cover 20 which is opposite to one side of the cover 20 adjacent to the hinge 30. After overlapping the cover 20 on the base 10, a user can lock the cover 20 by engaging the lock 10a, 10b to the recessed portion 20a, 20b. Accordingly, a user may carry the display 70 while storing it inside the base 10 and the cover 20. In addition, a handle (not shown) that a user can hold with his or her hand may be mounted on a button 10c formed on one side of the base 10.

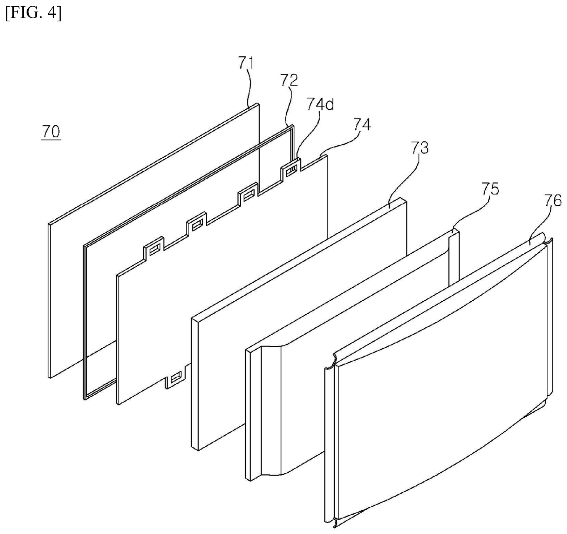

Referring to FIG. 4, the display 70 may include a display panel 71, a side cover 72, a backlight unit 73, 74, a frame 75, and a back cover 76.

The display panel 71 may form the front surface of the display 70, and may display images. The display panel 71 may display an image by having a plurality of pixels that output Red, Green or Blue (RGB) for each pixel in accordance with a timing. The display panel 71 may be divided into an active area where an image is displayed and a de-active area where an image is not displayed. The display panel 71 may include a front substrate and a rear substrate that are opposite to each other with a liquid crystal layer interposed therebetween. The display panel 71 may be referred to as an LCD panel.

The front substrate may include a plurality of pixels consisting of red, green, and blue subpixels. The front substrate may output light corresponding to the color of red, green, or blue according to a control signal.

The rear substrate may include switching elements. The rear substrate may switch a pixel electrode. For example, the pixel electrode may change the molecular arrangement of a liquid crystal layer according to an externally input control signal. The liquid crystal layer may include liquid crystal molecules. The arrangement of liquid crystal molecules may change in response to a voltage difference generated between the pixel electrode and a common electrode. The liquid crystal layer may transmit or block light provided from the backlight unit 73, 74 to the front substrate.

The side cover 72 may surround the circumference of the display panel 71, and cover the side surface of the display panel 71. The side cover 72 may be coupled to the display panel 71 or may support the display panel 71. The side cover 72 may be referred to as a guide panel 72, side frame 72 or middle cabinet 72.

The backlight unit 73, 74 may be located in a rear of the display panel 71. The backlight unit 73, 74 may include light sources. The backlight unit 73, 74 may be coupled to the frame 75 in front of the frame 75. The backlight unit 73, 74 may be driven by a full driving method or a partial driving method such as local dimming and impulsive driving. The backlight unit 73, 74 may include an optical sheet 74 and an optical layer 73.

The optical sheet 74 may evenly transmit light from the light source to the display panel 71. The optical sheet 74 may be composed of a plurality of layers. For example, the optical sheet 74 may include a prism sheet or a diffusion sheet. Meanwhile, a coupling portion 74d of the optical sheet 74 may be coupled to the frame 75 and/or the back cover 76.

The frame 75 may be located in a rear of the backlight unit 73, 74 and may support the components of the display 70. The edge of the frame 75 may be fixed to the side cover 72. For example, components such as backlight unit 73, 74 and a printed circuit board (PCB) on which a plurality of electronic devices are located may be coupled to the frame 75. For example, the frame 75 may include a metal material. The frame 75 may be referred to as a main frame 75, module cover 75, or cover bottom 75.

The back cover 76 may cover the rear of the frame 75. The back cover 76 may be coupled to the frame 75. For example, the back cover 76 may include a metal or plasttic material.

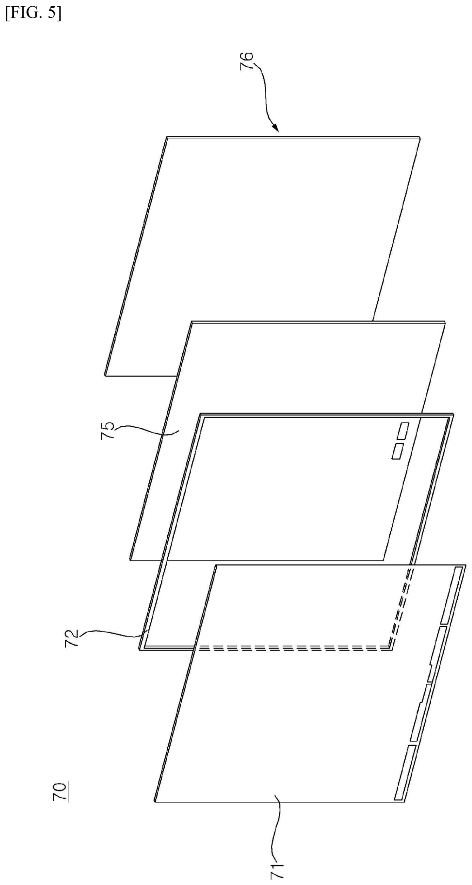

Referring to FIG. 5, the display 70 may include a display panel 71, a side cover 72, a frame 75, and a back cover 76.

The display panel 71 may form the front surface of the display 70 and display an image. The display panel 71 may divide an image into a plurality of pixels and output an image adjusted with color, brightness, and saturation for each pixel. The display panel 71 may be divided into an active area where images are displayed and a de-active area where images are not displayed. The display panel 71 may generate light corresponding to the color of red, green, or blue according to a control signal. The display panel 71 may be referred to as an OLED panel.

The side cover 72 may surround the circumference of the display panel 71 and cover the side surface of the display panel 71. The side cover 72 may be coupled to the display panel 71 or may support the display panel 71. The side cover 72 may be referred to as a guide panel 72, a side frame 72, or a middle cabinet 72.

The frame 75 may be located in a rear of the display panel 71, and the display panel 71 may be coupled thereto. The edge of the frame 75 may be fixed to the side cover 72. Electronic components may be mounted on the frame 75. For example, the frame 75 may include a metal material. The frame 75 may be referred to as a main frame 75, a module cover 75, a cover bottom 75, or a panel frame 75.

The back cover 76 may cover the rear of the frame 75. The back cover 76 may be coupled to the frame 75. For example, the back cover 76 may include metal or plastic material.

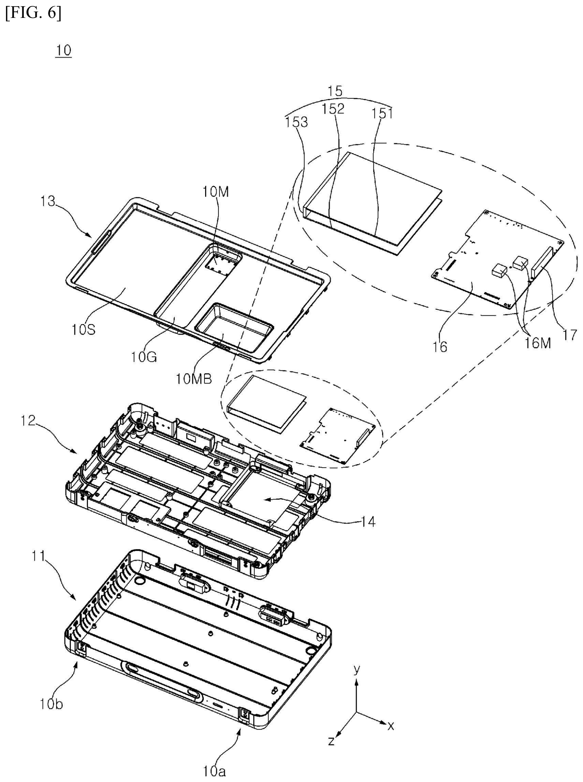

Referring to FIG. 6, the base 10 may include a bottom 11, a frame 12, a top 13, a jacket 15, and a substrate 16.

The bottom 11 may define the lower surface of the base 10 and may have an overall square tray shape. The bottom 11 may be referred to as an outer shell 11, an outer case 11, a bottom part 11, a housing 11, or a tray 11. The lock 10a, 10b may be provided on the side surface of the bottom 11.

The frame 12 may form the skeleton of the base 10. The frame 12 may be located on the bottom 11 and may be coupled to the bottom 11.

The top 13 may define the upper surface of the base 10 and may have an overall plate shape. The top 13 may be opposite to the bottom 11 with respect to the frame 12 and cover the frame 12. The top 13 may be detachably coupled to frame 12 and/or bottom 11. The top 13 may be referred to as a top part 13, a cap 13, a top case 13, or a top plate 13.

The seating portion 10S and the groove 10G may be formed on the upper surface of the top 13. A recessed portion 10M may be adjacent to one end of the groove 10G and may be formed by being recessed downward from the upper surface of the groove 10G. One end of the arm 50 (see FIG. 1) may be pivotably coupled to the recessed portion 10M.

For example, a mounting portion 10MB may be formed by being recessed downward from the upper surface of the top 13, and the battery Bt (see FIG. 1) may be detachably mounted on the mounting portion 10MB. Battery Bt may provide power to the display 70 (see FIG. 1) and may be rechargeable. For another example, the battery Bt may be embedded between the frame 12 and the top 13.

The jacket 15 and the substrate 16 may be located between the frame 12 and the top 13 and may be coupled to the frame 12. At least one device 16M may be mounted on the substrate 16. The device 16M may be an electronic device that generates heat when operated. The device 16M may be referred to as a heating device 16M. For example, the device 16M may be an IC chip or a System On Chip (SOC).

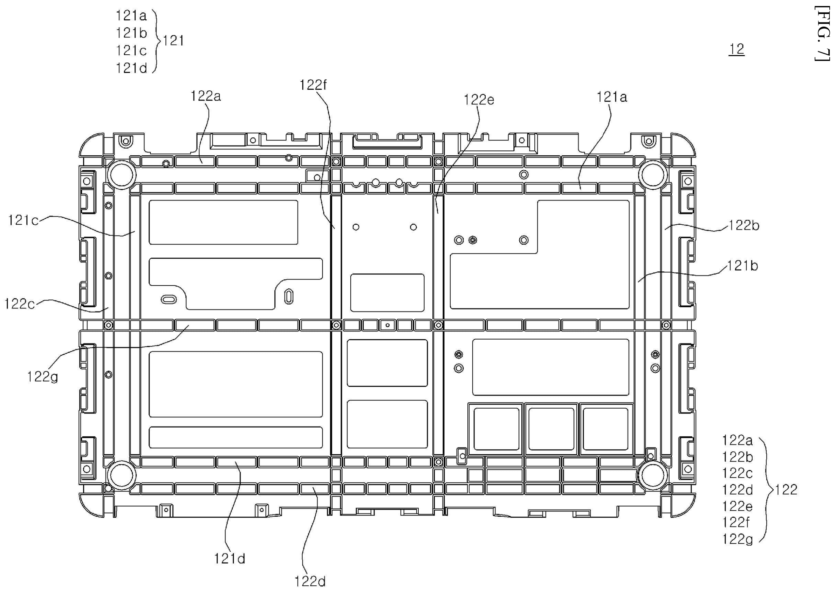

Referring to FIG. 7, the frame 12 may be formed of a high-strength, ultra-light material. For example, frame 12 may be formed by magnesium die casting. The frame 12 may include a first beam part 121 and a second beam part 122. The frame 12 may be referred to as a bottom frame 12, a box frame 12, a bottom box frame 12, or a bottom case frame 12.

The first beam part 121 may form an inner beam 121. The inner beam 121 may include a first part 121a, a second part 121b, a third part 121c, and a fourth part 121d. The first part 121a may face the fourth part 121d. The second part 121b may face the third part 121c. The first part 121a may connect one end of the second part 121b and one end of the third part 121c, and the fourth part 121d may connect the other end of the second part 121b and the other end of the third part 121c. For example, the first part 121a, the second part 121b, the third part 121c, and/or the fourth part 121d may have the same cross-sectional shape.

The second beam part 122 may form an outer beam 122a, 122b, 122c, 122d and a cross beam 122e, 122f, 122g. The outer beam 122a, 122b, 122c, 122d may include a first part 122a, a second part 122b, a third part 122c, and a fourth part 122d. The first part 122a may face the fourth part 122d. The second part 122b may face the third part 122c. The first part 122a may connect one end of the second part 122b and one end of the third part 122c, and the fourth part 122d may connect the other end of the second part 122b and the other end of the third part 122c. For example, the first part 122a, the second part 122b, the third part 122c, and/or the fourth part 122d may have the same cross-sectional shape.

The cross beam 122e, 122f, 122g may include a vertical part 122e, 122f and a horizontal part 122g. The horizontal part 122g may be parallel to the first part 121a and/or the fourth part 121d of the inner beam 121 at between the first part 121a and the fourth part 121d of the inner beam 121. The horizontal part 122g may intersect the second part 121b and the third part 121c of the inner beam 121, and may intersect the second part 122b and the third part 122c of the outer beam 122a, 122b, 122c, 122d.

The vertical part 122e, 122f may include a first vertical part 122e and a second vertical part 122f. The first vertical part 122e may be located between the second part 121b and the third part 121c of the inner beam 121, and may intersect the first part 121a and/or the fourth part 121d of the inner beam 121. The first vertical part 122e may intersect the first part 122a and/or the fourth part 122d of the outer beam 122a, 122b, 122c, 122d. The second vertical part 122f may be located between the second part 121b and the third part 121c of the inner beam 121, and may intersect the first part 121a and/or the fourth part 121d of the inner beam 121. The second vertical part 122f may intersect the first part 122a and/or the fourth part 122d of the outer beam 122a, 122b, 122c, 122d.

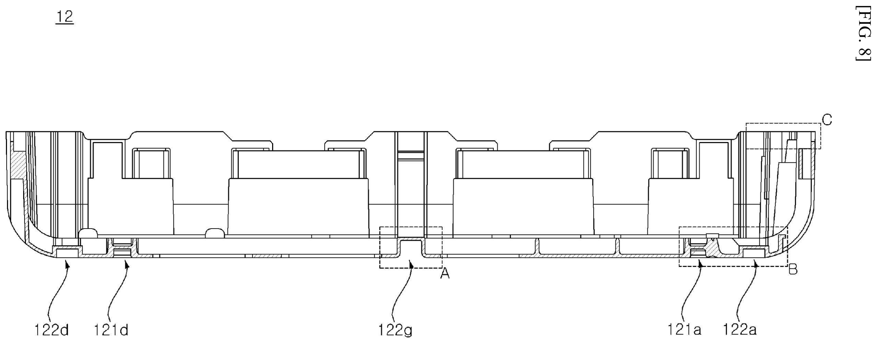

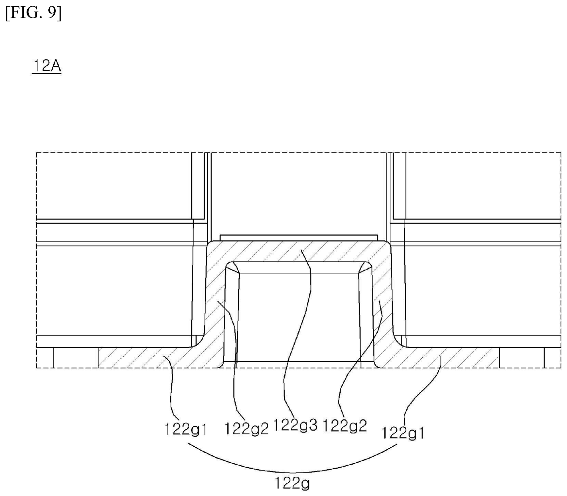

Referring to FIGS. 8 and 9, the horizontal part 122g of the cross beam 122e, 122f, 122g may include a bottom part 122g1, a side part 122g2, and a top part 122g3. The bottom part 122g1 may form the bottom surface of the horizontal part 122g of the cross beam 122e, 122f, 122g.

The side part 122g2 may be bent and extend from the bottom part 122g1. The top part 122g3 may be bent and extend from the side part 122g2. For example, the bottom part 122g1, the top part 122g3, and the side part 122g2 may have an overall U shape.

Accordingly, the rigidity of the frame 12 can be improved.

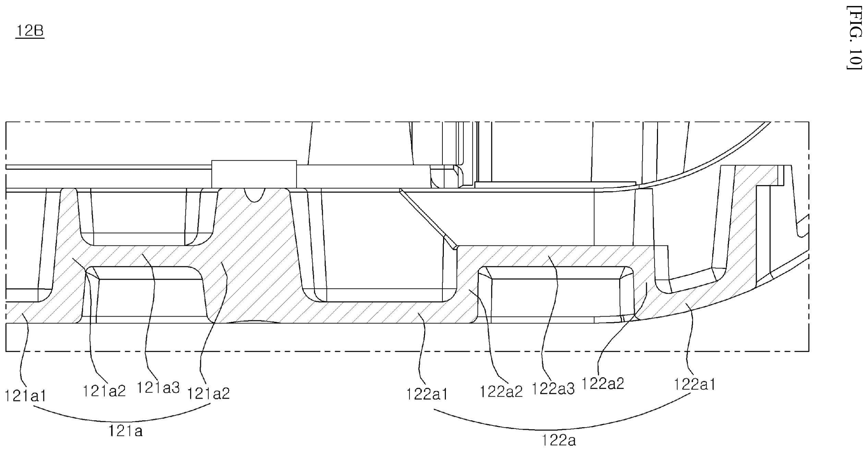

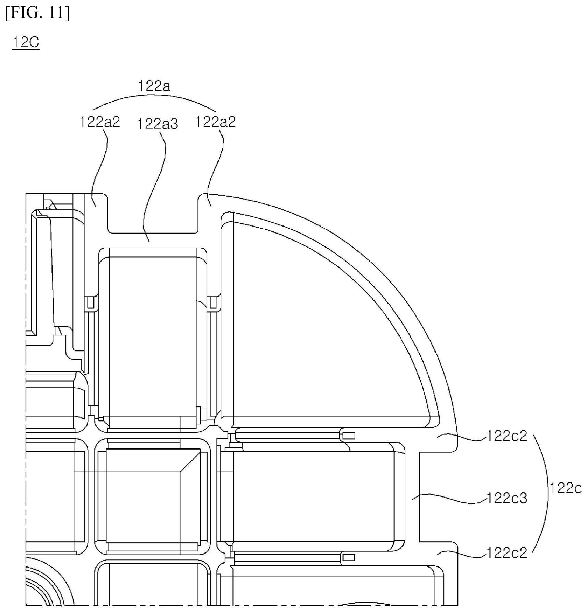

Referring to FIGS. 10 and 11 together with FIGS. 7 and 8, the first part 121a of the inner beam 121 may include a bottom part 121a1, a side part 121a2, and a top part 121a3. The bottom part 121a1 may form the bottom surface of the first part 121a of the inner beam 121.

The side part 121a2 may be bent and extend from the bottom part 121a1. The top part 121a3 may be bent and extend from the side part 121a2. For example, the top part 121a3 and the side part 121a2 may have an overall H shape.

The first part 122a of the outer beam 122a, 122b, 122c, 122d of the second beam part 122 may include a bottom part 122a1, a side part 122a2, and a top part 122a3. The bottom part 122a1 may form the bottom surface of the first part 122a of the outer beam 122a, 122b, 122c, 122d.

The side part 122a2 may be bent and extend from the bottom part 122a1. The top part 122a3 may be bent and extend from the side part 122a2. For example, the bottom part 122a1, the top part 122a3, and the side part 122a2 may have an overall U shape.

Accordingly, the rigidity of the frame 12 can be improved.

Referring to FIGS. 11 and 7, the first part 122a of the outer beam 122a, 122b, 122c, 122d may intersect the third part 122c of the outer beam 122a, 122b, 122c, 122d. For example, the cross section of the first part 122a of the outer beam 122a, 122b, 122c, 122d may have an overall H shape, and the cross section of the third part 122c may have an overall H shape. Accordingly, the corner rigidity of the frame 12 can be improved.

The first part 122a of the outer beam 122a, 122b, 122c, 122d may intersect the second part 122b of the outer beam 122a, 122b, 122c, 122d. For example, the cross-section of the first part 122a of the outer beam 122a, 122b, 122c, 122d may have an overall H shape, and the cross-section of the second part 122b may have an overall H shape. Accordingly, the corner rigidity of the frame 12 can be improved. Accordingly, the corner rigidity of the frame 12 can be improved.

The fourth part 122d of the outer beam 122a, 122b, 122c, 122d may intersect the third part 122c of the outer beam 122a, 122b, 122c, 122d. For example, the cross section of the fourth part 122d of the outer beam 122a, 122b, 122c, 122d may have an overall H shape, and the cross section of the third part 122c may have an overall H shape. Accordingly, the corner rigidity of the frame 12 can be improved.

The fourth part 122d of the outer beam 122a, 122b, 122c, 122d may intersect the second part 122b of the outer beam 122a, 122b, 122c, 122d. For example, the cross section of the fourth part 122d of the outer beam 122a, 122b, 122c, 122d may have an overall H shape, and the cross section of the second part 122b may have an overall H shape. Accordingly, the corner rigidity of the frame 12 can be improved.

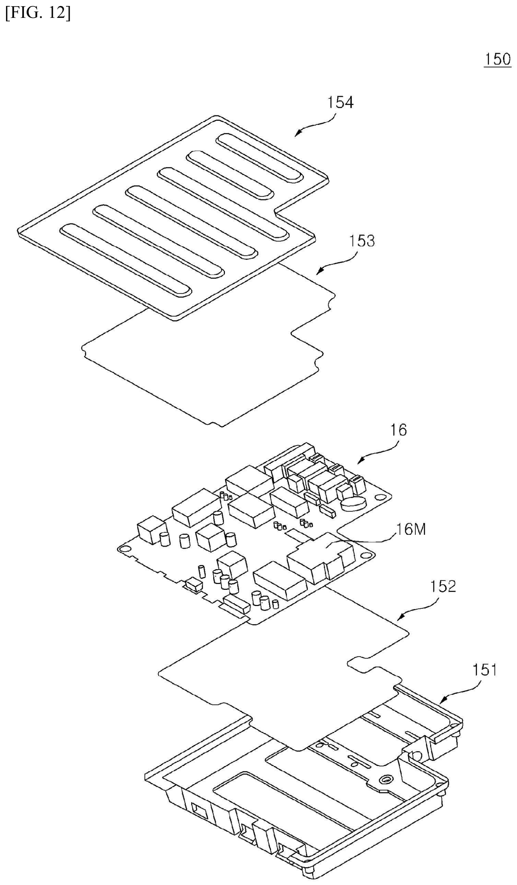

Referring to FIG. 12, a housing 150 may include a lower case 151 and an upper cover 154. The lower case 151 may have a tub shape that provides an internal accommodation space. For example, the lower case 151 may be an injection molded product made of a flame-retardant material. The lower case 151 may be made of a material having enhanced chemical resistance properties. The lower case 151 may have an opening to reduce weight. The lower plate 152 may be located at the bottom of the lower case 151. The lower plate 152 may include metal. The lower plate 152 may cover the opening of the lower case 151.

At least one electrical device 16M may be mounted on the substrate 16. For example, the substrate 16 may be a power supply unit (PSU) or a main board. The substrate 16 may be located on the lower plate 152.

The upper plate 153 may be located on the substrate 16. The upper plate 153 may include metal. The upper plate 153 may face the lower plate 152.

The upper cover 154 may cover the upper plate 153 and close the lower case 151. The upper cover 154 may include metal. For example, the upper cover 154 may be aluminum. The upper cover 154 may be coupled to the lower case 151.

Accordingly, the chemical resistance of the substrate 16 on which the electrical devices 16M are mounted can be improved.

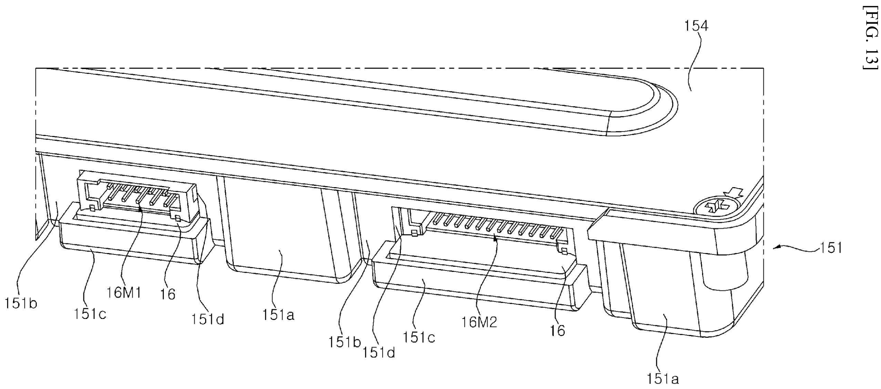

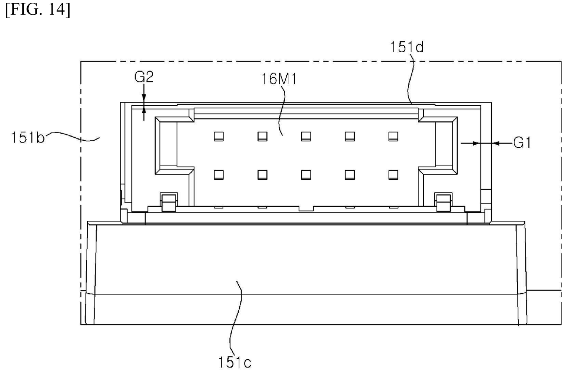

Referring to FIGS. 13 and 14, the housing 150 may include a docking opening 151d. The docking opening 151d may be formed on the side surface of the housing 150. A recessed side wall 151b may be formed around the docking opening 151d. The recessed side wall 151b may be recessed while forming a step inward from the outer side wall 151a of the housing 150.

A connector 16M1, 16M2 mounted on the substrate 16 may be exposed to the outside through the docking opening 151d. An under cover 151c may be formed on the lower side of the docking opening 151d. The under cover 151c may support the connector 16M1, 16M2 and/or the substrate 16 below the connector 16M1, 16M2 exposed through the docking opening 151d. The under cover 151c may protrude from the recessed side wall 151b. The outer surface of the under cover 151c may correspond to the outer surface of the outer side wall 151a.

A gap G1, G2 may be formed between the connector 16M1, 16M2 and the docking opening 151d. The gap G1, G2 may include a first gap G1 and a second gap G2. The first gap G1 may be formed between the connector 16M1, 16M2 and the left or right inner surface of the docking opening 151d. The second gap G2 may be formed between the connector 16M1, 16M2 and the upper inner surface of the docking opening 151d.

This not only improves chemical resistance, but also prevents external impact on critical components.

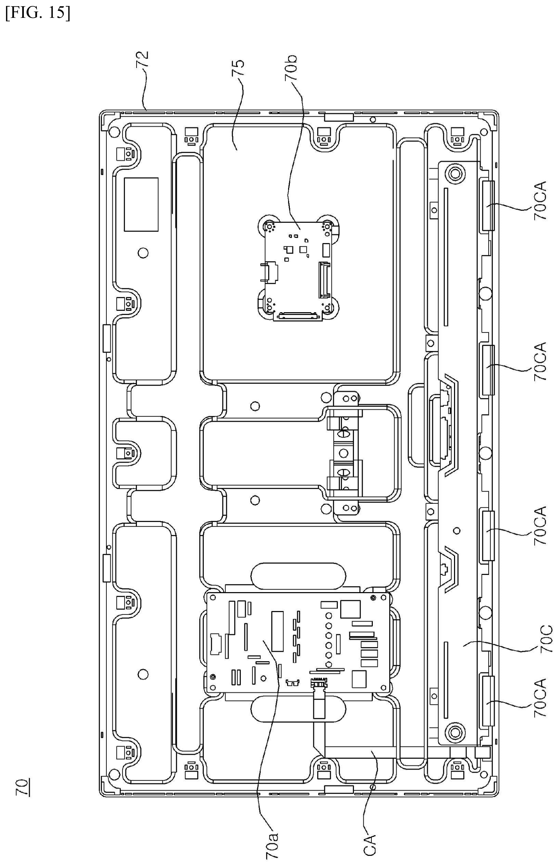

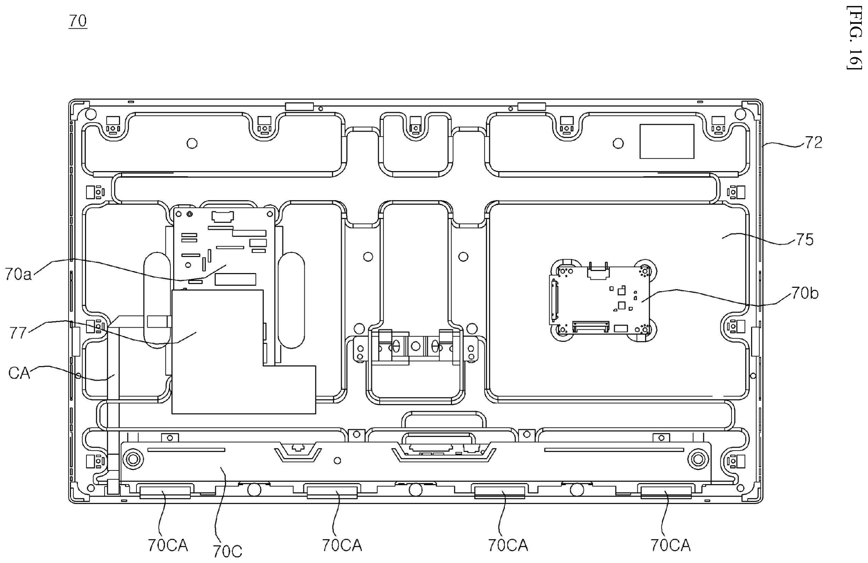

Referring to FIGS. 15 and 16, a control board 70a, 70b, 70c may be mounted or fixed to the rear surface of the frame 75 of the display 70. For example, the control board 70a, 70b, 70c may be a power board 70a, a sub board 70b, or a source PCB 70c. Electronic devices may be mounted on the control board 70a, 70b, 70c, and heat may be generated as the electronic devices drive.

A flexible cable CA may electrically connect the power board 70a and the display panel 71. The power board 70a may control power and/or signal provided to the light source of the display 70. The power board 70a may be referred to as a light source drive board 70a. The sub board 70a may process image information provided to the display panel 71 (see FIG. 1). A source PCB 70c may be mounted on or fixed to the rear surface of the frame 75 while being adjacent to the lower side of the frame 75. A COF 70CA may electrically connect the source PCB 70c and the display panel 71.

A shielding member 77 may cover the control board 70a, 70b, 70c. The shielding member 77 may be referred to as a first shielding member 77, a display shielding member 77, a heat dissipation sheet 77, or a heat dispersion sheet 77. For example, the shielding member 77 may be a graphite sheet. The shielding member 77 may cover the power board 70a. The shielding member 77 may overlap at least a portion of the power board 70a.

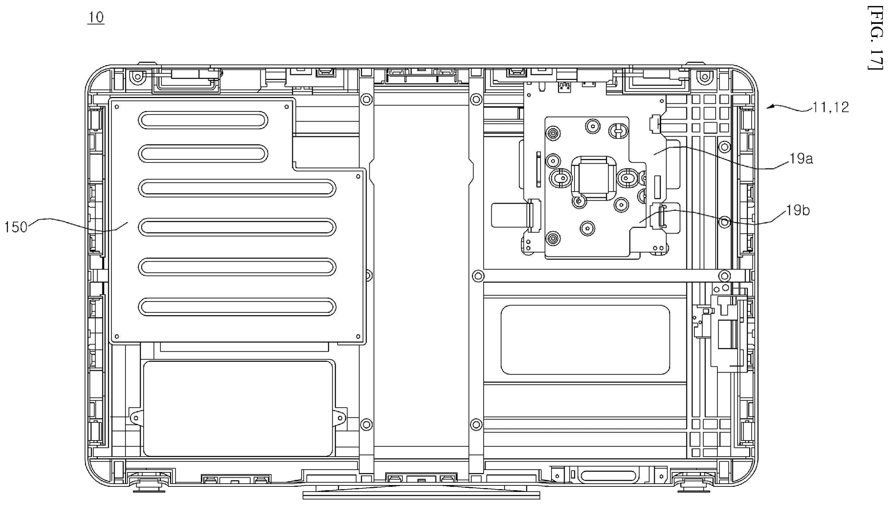

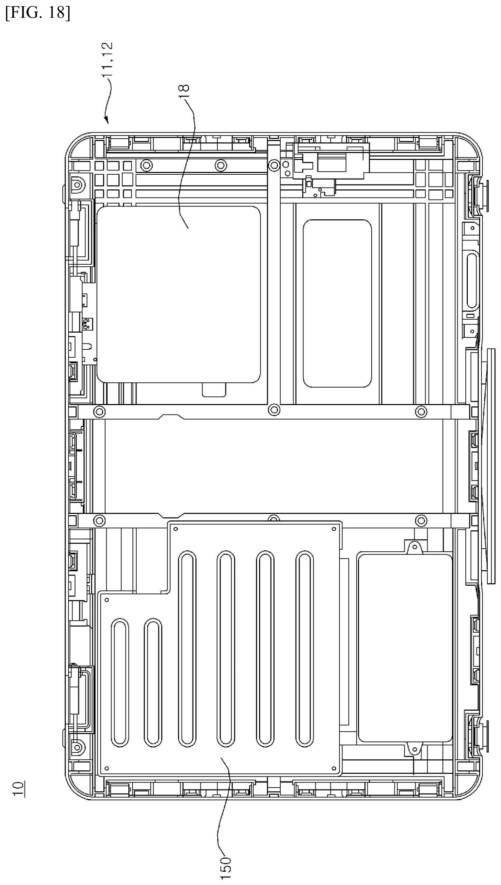

Referring to FIGS. 17 and 18, a housing 150 containing a power supply unit 16 (see FIG. 6) may be mounted on or coupled to the frame 12 of the base 10. A main board 19a may be adjacent to the housing 150 of the power supply unit 16 and may be mounted on or coupled to the frame 12 of the base 10. The power supply unit 16 may supply power required for the display device (see FIG. 1). The main board 19a may process image information displayed through the display panel 71 and/or voice information provided through a speaker assembly. The power supply unit 16 and/or the main board 19a may generate heat when driven.

A shield plate 19b may cover a portion of the main board 19a and may be mounted or fixed on the frame 12. The shield plate 19b may prevent physical and electrical damage to the main board 19a.

A shielding member 18 may cover the main board 19a. The shielding member 18 may be referred to as a second shielding member 18, a base shielding member 18, a heat dissipation sheet 18, or a heat dispersion sheet 18. The shielding member 18 may overlap all or at least portion of the main board 19a. For example, the shielding member 18 may be a graphite sheet.

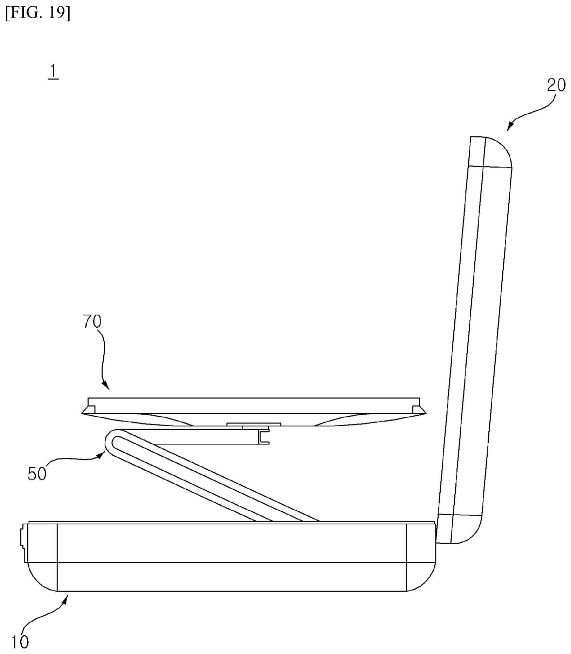

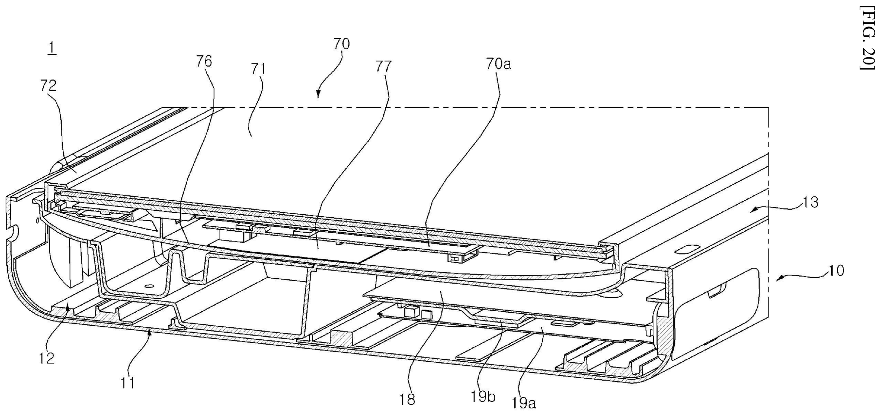

Referring to FIGS. 19 and 20, the display 70 may be stored inside the base 10 as the cover 20 is opened and closed from the base 10 around the hinge 30 (see FIG. 1). The display 70 may be moved to the outside of the base 10 or may be stored on the base 10 by the arm 50. When the display 70 is stored in the base 10, the display 70 and the base 10 may be arranged side by side and face each other.

The side cover 72 may cover the side surface of the display panel 71, and the back cover 76 may be located at the rear of the display panel 71 and may be coupled to the side cover 72. The control board 70a may be located between the display panel 71 and the back cover 76. For example, the control board 70a may be a light source drive board 70a, and high heat may be generated when the control board 70a is driven. Heat generated in the control board 70a may be emitted to the outside through the back cover 76.

The main board 19a mounted on the frame 12 of the base 10 may be located between the frame 12 and the top 13. A lot of heat may be generated when the main board 19a is driven, and the heat may be emitted to the outside through the top 13.

A first shielding member 77 may be located between the control board 90a and the back cover 76. The first shielding member 77 may be fixed or adhered to the back cover 76. For example, the first shielding member 77 may be a graphite sheet. A second shielding member 18 may be located between the main board 19a and the top 13.

Referring to FIGS. 15 and 17 together, FIG. 15 may show the rear surface of the display 70 facing the base 10, and FIG. 17 may show the front surface of the base 10 facing the display 70.

The housing 150 containing the power supply unit 16 (see FIG. 6) may generate high heat. The light source drive board 70a may generate high heat. When the display 70 is stored in the base 10, the housing 150 containing the power supply unit 16 may not overlap the light source drive board 70a. Accordingly, the heat generated in the housing 150 and the heat generated in the light source drive board 70a can be evenly distributed within the display 70.

When the display 70 is stored in the base 10, the light source drive board 70a may at least partially overlap the main board 19a. Heat generated from the light source drive board 70a and heat generated from the main board 19a may be emitted toward each other and accumulate.

Heat generated from the light source drive board 70a may be distributed and dissipated in the horizontal direction by the first shielding member 77. Heat generated from the main board 19a may be distributed and dissipated in the horizontal direction by the second shielding member 18. For example, the first shielding member 77 may partially or at least partially overlap the second shielding member 18. For another example, the first shielding member 77 may be aligned so as not to overlap the second shielding member 18. For another example, the first shielding member 77 may form a boundary and be adjacent to the second shielding member 18. Accordingly, the heat generated from the main board 19a and the heat generated from the light source drive board 70a may not be accumulated but dispersed.

Accordingly, even when the display 70 is stored in the base 10, heat generated by driving the display 70 can be evenly distributed and dissipated.

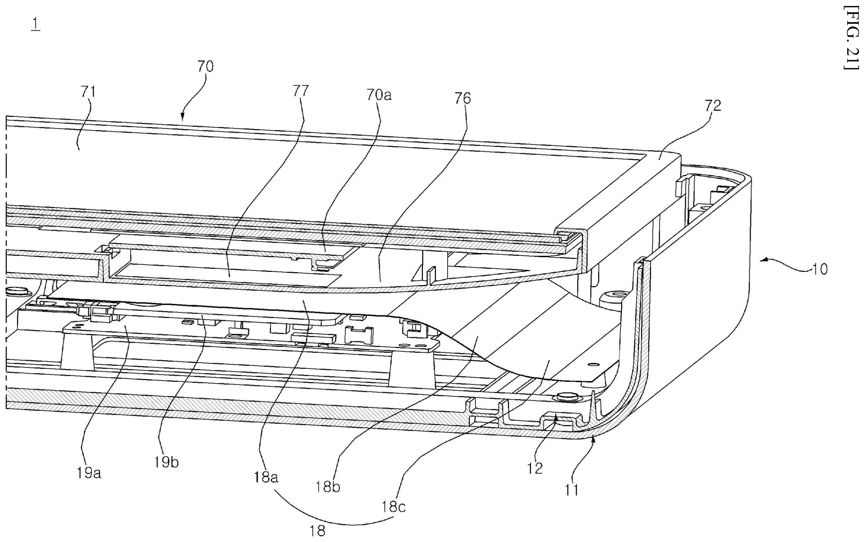

Referring to FIG. 21, the second shielding member 18 may include a first sheet part 18a, a second sheet part 18b, and a third sheet part 18c.

The first sheet part 18a may be located between the main board 19a and the light source drive board 70a and may cover the main board 19a. The second sheet part 18b may extend from the first sheet part 18a. The second sheet part 18b may form a slope lowered from the first sheet part 18a.

The second sheet part 18b may be curved and extend from the first sheet part 18a toward the bottom of the frame 12 of the base 10. The third sheet part 18c may be located above the bottom of the frame 12 of the base 10 and may cover the bottom of the frame 12.

The first sheet part 18a may have a negative inclination toward the second sheet part 18b. The inclination of the first sheet part 18a may be smaller than the inclination of the second sheet part 18b.

Accordingly, moisture that may be formed on the second shielding member 18 covering the main board 19a as the main board 19a is turned on and off may be discharged while passing through the first sheet part 18a, the second sheet part 18b, and the third sheet part 18c.

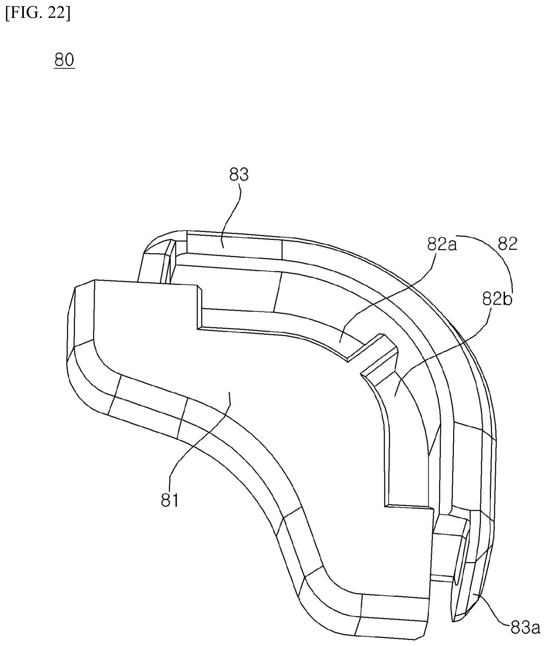

Referring to FIGS. 22 to 24, a bumper 80 may include a body 81 and a wall 83. The body 81 may be a first piece 81 that extends widely and has a constant thickness. The wall 83 may be a second piece 83 extending in a direction intersecting the direction in which the body 81 extends. The wall 83 may be formed with the body 81 as one body.

A trench 82 may be formed on the upper surface of the body 81 and may be adjacent to the wall 83. There may be a plurality of trenches 82. The plurality of trenches 82 may include a first trench 82a and a second trench 82b. The first trench 82a may extend along the inner surface of the wall 83 and may be adjacent to the second trench 82b. The second trench 82b may extend along the inner surface of the wall 83 and may be adjacent to the first trench 82a.

An apron 83a may be formed outside the wall 83. The apron 83a may be formed on the outside of the wall 83 and be larger than the wall 83. The left and right sides and/or lower end of the apron 83a may extend beyond the wall 83.

An insert 85 may extend to the lower side of the body 81 and may be opposite to the wall 83 and/or the apron 83a. The insert 85 may be parallel to the apron 83a. The insert 85 may be opposite to the apron 83a with respect to the wall 83. A fixing rib 85a may be formed to protrude from the inner surface of the insert 85. A sealing rib 85b may be formed to protrude from the outer surface of the insert 85. There may be a plurality of sealing ribs 85b, and the plurality of sealing ribs 85b may be formed parallel to each other and spaced apart from each other.

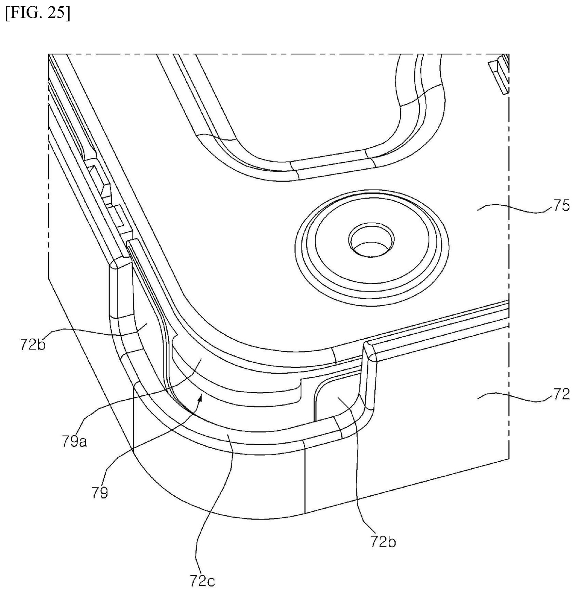

Referring to FIGS. 25 to 27, the bumper 80 may be coupled to the side cover 72 of the display 70 (see FIG. 1). The body 81 of the bumper 80 may be in contact with the rear surface of the frame 75 or may be supported by the rear surface of the frame 75. The wall 83 of the bumper 80 may be located on a cut-out part 72c of the side cover 72. The cut-out part 72c of the side cover 72 may be inserted into between the insert 85 of the bumper 80 and the apron 83a of the wall 83. The depth of the cut-out part 72c may correspond to the height of the wall 83.

The back cover 76 may cover the rear surface of the frame 75 and may be coupled to the frame 75 and/or the side cover 72. A coupling protrusion 76a may be formed at a corner of the back cover 76 and protrude from the front surface of the back cover 76. The coupling protrusion 76a may be inserted into the trench 82 of the bumper 80.

A guide panel 79 may be inserted into between the frame 75 and the side cover 72 and may support the rear surface adjacent to the edge of the display panel 71. The guide panel 79 may be provided with a locking portion 79a. The locking portion 79a may be formed at a corner of the guide panel 79 and protrude from the outer surface of the guide panel 79. The bumper 80 may be inserted into the cut-out part 72c of the side cover 72 so that the fixing rib 85a of the bumper 80 engages with and is fixed to the locking portion 79a of the guide panel 79.

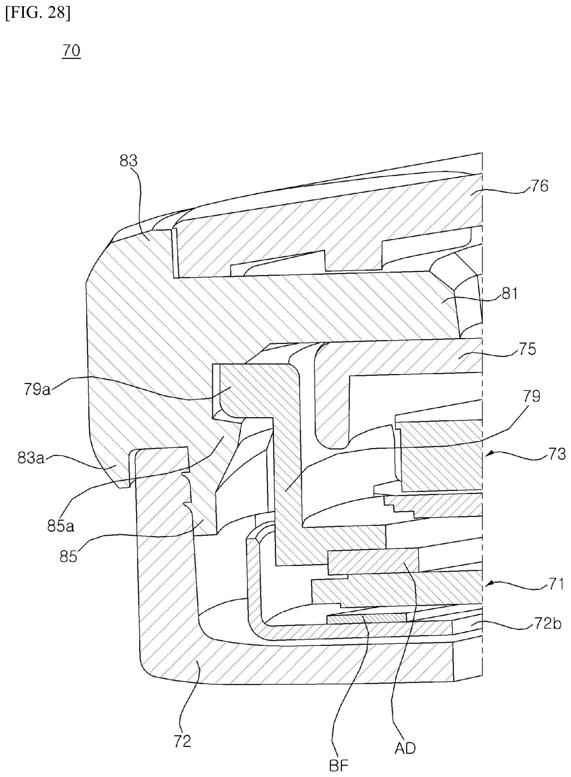

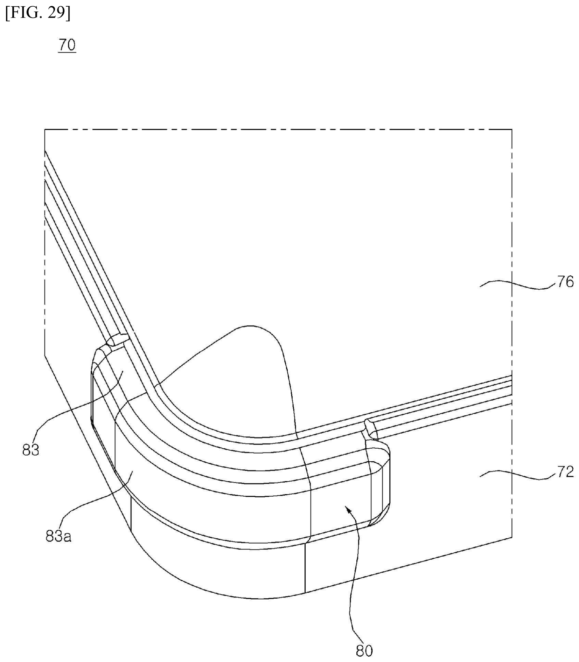

Referring to FIGS. 28 and 29, the optical layer 73 may be located between the frame 75 and the display panel 71. The guide panel 79 may be coupled to the frame 75, and may support the rear surface adjacent to the edge of the display panel 71. The display panel 71 may be fixed to the guide panel 79 by an adhesive member AD. An inner top 72b may cover the front surface of the edge of the display panel 71 and may be coupled to the guide panel 79 at between the guide panel 72b and the side cover 72. A buffer layer BF may be fixed to the inside of the inner top 72b and face the front surface of the display panel 71. The buffer layer BF may form a gap with the front surface of the display panel 71.

The side cover 72 may cover the front surface adjacent to the edge of the display panel 71 and may cover the side surface of the guide panel 79 and/or the inner top 72b. The body 81 of the bumper 80 may be located between the frame 75 and the back cover 76, and the wall 83 of the bumper 80 may connect the side cover 72 and the back cover 76. The apron 83a of the bumper 80 may protrude more than the outer surface of the side cover 72.

Accordingly, the display 70 can be protected by absorbing impact applied to the corner of the display 70 that may occur while storing the display 70 in the base 10 (see FIG. 19).

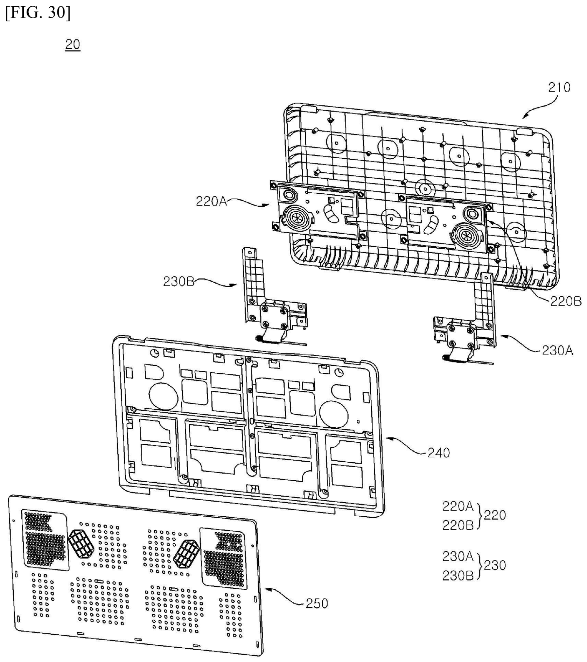

Referring to FIG. 30, the cover 20 may include an outer cover 210, a middle frame 240, and an inner cover 250. The outer cover 210 may have a tub shape and have an accommodating space therein. The middle frame 240 may be coupled to the inside of the outer cover 210, and the inner cover 250 may be coupled to the middle frame 240. The middle frame 240 may be located between the outer cover 210 and the inner cover 250.

A speaker assembly 220 may be located between the middle frame 240 and the outer cover 210, and may be coupled to or fixed to the outer cover 210. A hinge assembly 230 may be fixed to the outer cover 210. The hinge assembly 230 may be located between the middle frame 240 and the outer cover 210.

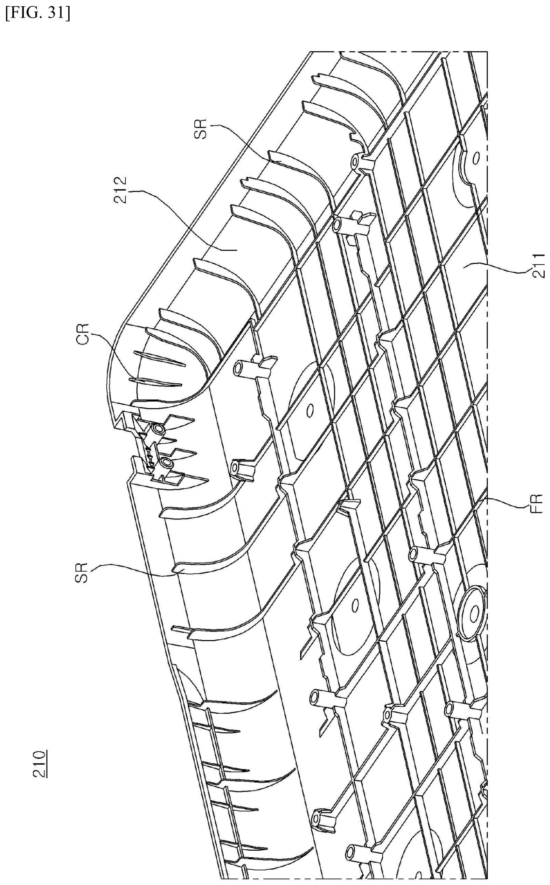

Referring to FIG. 31, the outer cover 210 may include a center part 211, a side part 212, and ribs FR, SR, and CR. The center part 211 may form a flat plate of the outer cover 210. The side part 212 may extend from the center part 211 and may form a wall or dam at the periphery of the center part 211.

The ribs FR, SR, and CR may include a center rib FR, a side rib SR, and a corner rib CR. The center ribs FR may be formed on the inner surface of the center part 211. The center ribs FR may form a matrix that intersects each other. The side ribs SR may be formed on the inner surface of the side part 212. The side rib SR may be connected to the center rib FR. The corner ribs CR may be formed on the inner surface of the corner formed by the side part 212.

Accordingly, the rigidity of the outer cover 210 may be improved, and the outer cover 210 may not be damaged by impact applied to the side and/or corner of the outer cover 210.

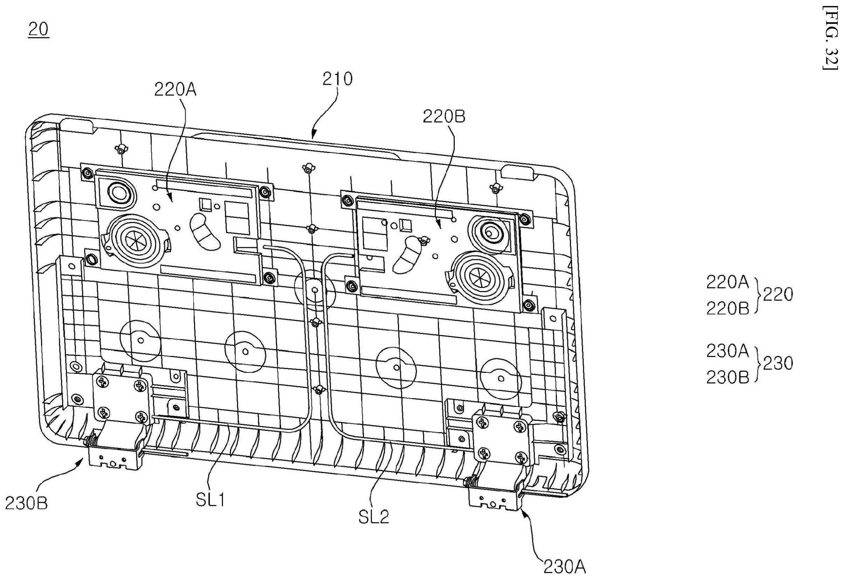

Referring to FIG. 32, the speaker assembly 220 may be fixed to the inside of the outer cover 210. There may be a plurality of speaker assemblies 220. The plurality of speaker assemblies 220 may include a first speaker assembly 220A and a second speaker assembly 220B. The first speaker assembly 220A may be a left-facing speaker, and the second speaker assembly 220B may be a right-facing speaker. The first speaker assembly 220A and the second speaker assembly 220B may provide stereo sound.

There may be a plurality of speaker cable SL1, SL2, and a first speaker cable SL1 may be connected to a first speaker assembly 220A. A second speaker cable SL2 may be connected to a second speaker assembly 220B. The speaker cable SL1, SL2 may provide power and audio signals to the speaker assembly 220. The speaker cable SL1, SL2 may be wired to the inside of the outer case 210. The speaker cable SL1, SL2 may pass through the hinge assembly 230.

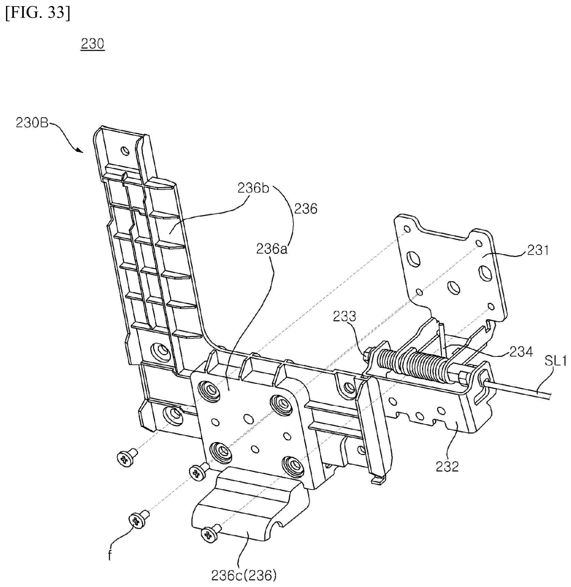

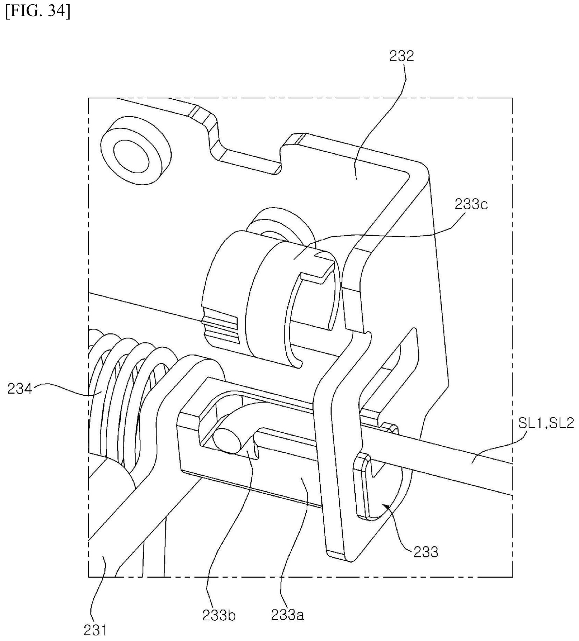

Referring to FIGS. 33 and 34, the hinge assembly 230 may include an upper bracket 231, a lower bracket 232, a hinge shaft 233, and a reinforcing member 236. The upper bracket 231 may have a curved plate shape. The upper bracket 231 may be connected to the lower bracket 232 and the hinge shaft 233. An elastic member 234 may be coupled to the hinge shaft 233. For example, the elastic member 234 may be a coil spring 234, and the hinge shaft 233 may be inserted into the coil spring 234. One end of the coil spring 234 may be supported by the lower bracket 232, and the other end of the coil spring 234 may be supported by the upper bracket 231.

The reinforcing member 236 may be referred to as a reinforcing bracket 236. The reinforcing member 236 may include a fixing part 236a and an expansion part 236b. The fixing part 236a may be coupled to or fixed to the upper bracket 231 by a fastening member f. The expansion part 236b may extend from the fixing part 236a. The expansion part 236b may have an overall L shape. The expansion part 236b may be fixed to the outer cover 210 (see FIG. 32). The reinforcing member 236 may further include a cover part 236c. The cover part 236c may extend from the fixing part 236a. The cover part 236c may cover the hinge shaft 233.

The hinge shaft 233 may include a shaft body 233a, a receiving groove 233b, and a cap 233c. The shaft body 233a may connect the upper bracket 231 and the lower bracket 232 with a hinge. The receiving groove 233b may be recessed inward from the outer surface of the shaft body 233a and may extend long. One end of the receiving groove 233b may be formed at the distal end of the shaft body 233a, and the other end of the receiving groove 233b may be formed on the side surface of the shaft body 233a. The receiving groove 233b may have an overall L shape.

The speaker cable SL1, SL2 may be wired in the receiving groove 233b. The speaker cable SL1, SL2 may be inserted into one end of the receiving groove 233b and wired to the other end of the receiving groove 233b. The cap 233c may be coupled to the shaft body 233a while covering the receiving groove 233b. The cap 233c may fix the speaker cable SL1, SL2 stored in the receiving groove 233b.

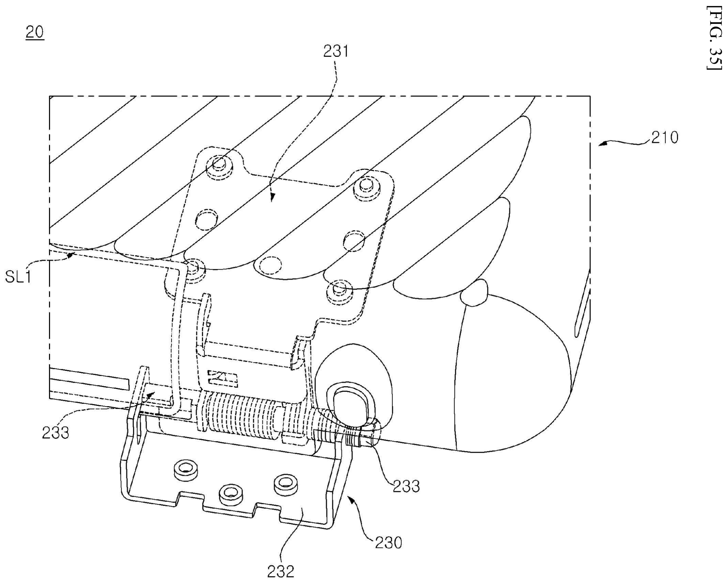

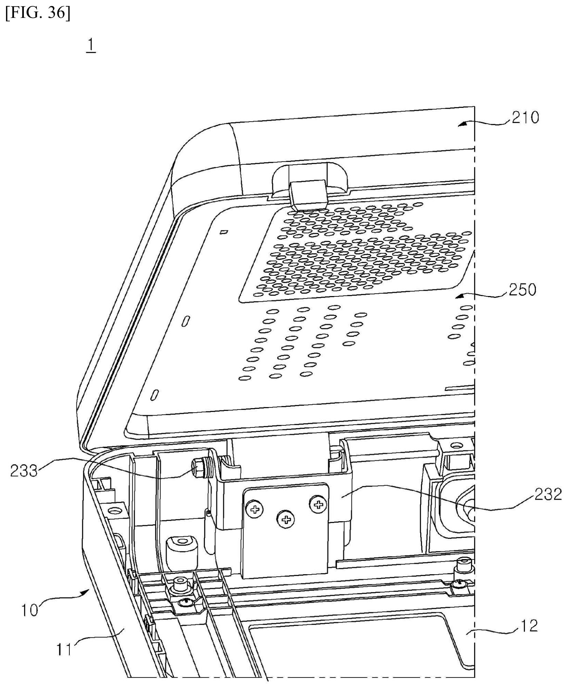

Referring to FIGS. 35 and 36, the upper bracket 231 may be fixed to the inner surface of the outer cover 210. The lower bracket 232 may be fixed to the frame 12 of the base 10.

The speaker cable SL1, SL2 (see FIG. 32) may be wired to be received in the hinge shaft 233 of the hinge assembly 230 inside the outer cover 210. The speaker cable SL1, SL2 may be wired to the base 10 through the hinge shaft 233.

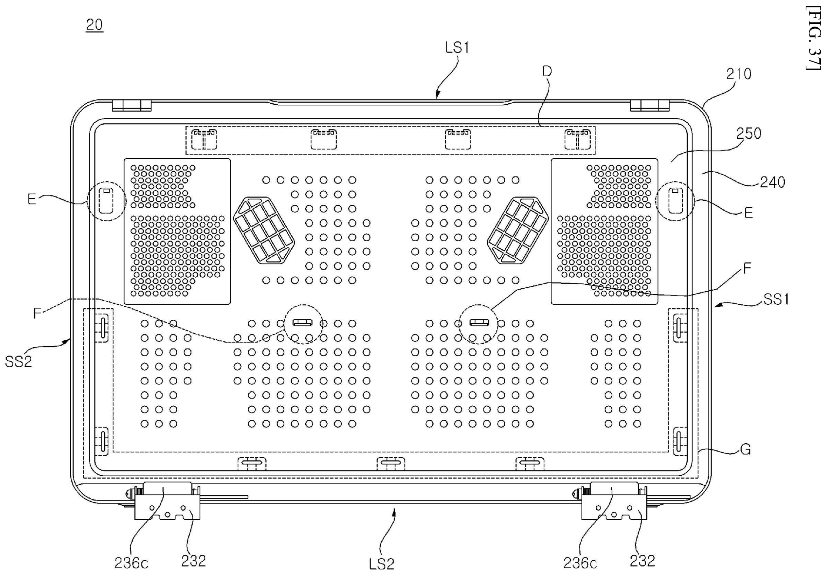

Referring to FIG. 37, the inner cover 250 may be coupled to the middle frame 240. The inner cover 250 may be detachably coupled or fixed to the middle frame 240. The inner cover 250 may be coupled to the middle frame 240 by a coupling set D, E, F, G. There may be a plurality of coupling sets D, E, F, and G.

A first coupling set D may be located along the first long side LS1 while being adjacent to the first long side LS1 of the cover 20 and. A second coupling set E may be located adjacent to the first short side SS1 and/or the second short side SS2. For example, the second coupling set E may be closer to the first long side LS1 than the second long side LS2.

A third coupling set F may be located in the central area between the first long side LS1 and the second long side LS2 and/or between the first short side SS1 and the second short side SS2. A fourth coupling set G may be adjacent to the second long side LS2 and may be located along the second long side LS2. The fourth coupling set G may be disposed along the first short side SS1 and/or the second short side SS2.

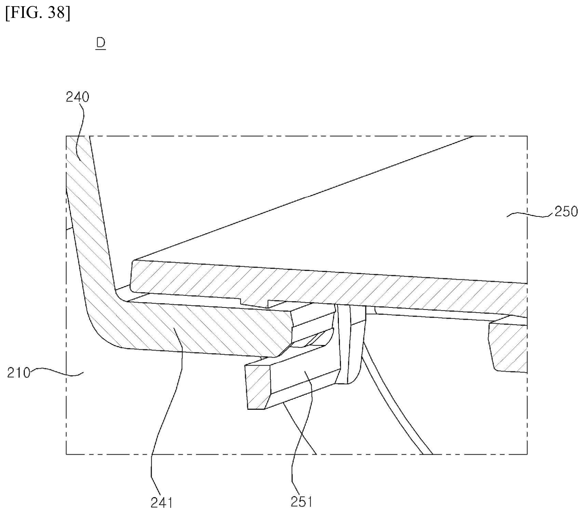

Referring to FIG. 38, the first coupling set D may include an insert tip 241 and a hold hole 251. The middle frame 240 may include an insert tip 241. The insert tip 241 may protrude and extend from the middle frame 240. The hold hole 251 may be formed on the lower surface of the inner cover 250. The hold hole 251 may have a long extending hole. The insert tip 241 may be inserted into the hold hole 251. The insert tip 241 may prevent the inner cover 250 from moving away from or separating from the middle frame 240 while pulling the hold hole 251.

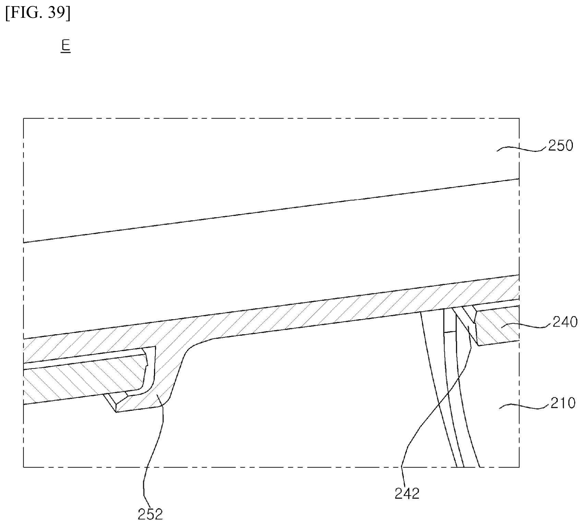

Referring to FIG. 39, the second coupling set E may include an insert hole 242 and a holder 252. The insert hole 242 may be formed in the middle frame 240. The holder 252 may protrude from the inner surface of the inner cover 250 and be bent. For example, the holder 252 may have a hook-shape. The holder 252 may be inserted into the insert hole 242 and may hold one side of the insert hole 242. The holder 252 may prevent the inner cover 250 from moving away from or separating from the middle frame 240 while pulling the insert hole 242.

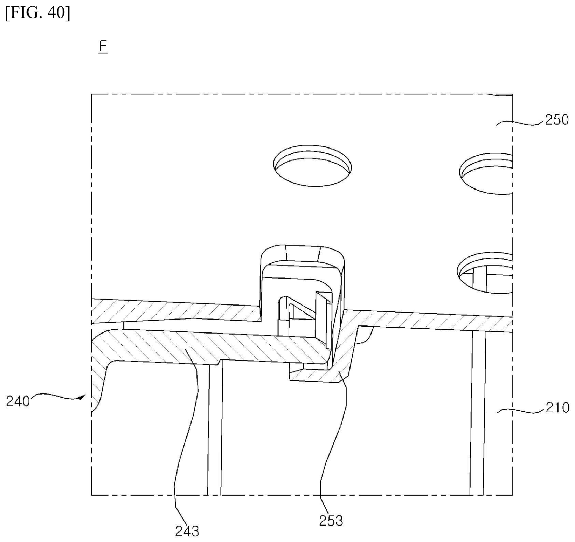

Referring to FIG. 40, the third coupling set F may include a holding tip 243 and a holding lever 253. The middle frame 240 may include a holding tip 243. The holding tip 243 may extend long from the middle frame 240. The inner cover 250 may include a holding lever 253. The holding lever 253 may protrude from the inner surface of the inner cover 250 and be bent. The holding tip 243 may be placed on the holding lever 253. The holding tip 243 may prevent the inner cover 250 from moving away from or separating from the middle frame 240 while pulling the holding lever 253.

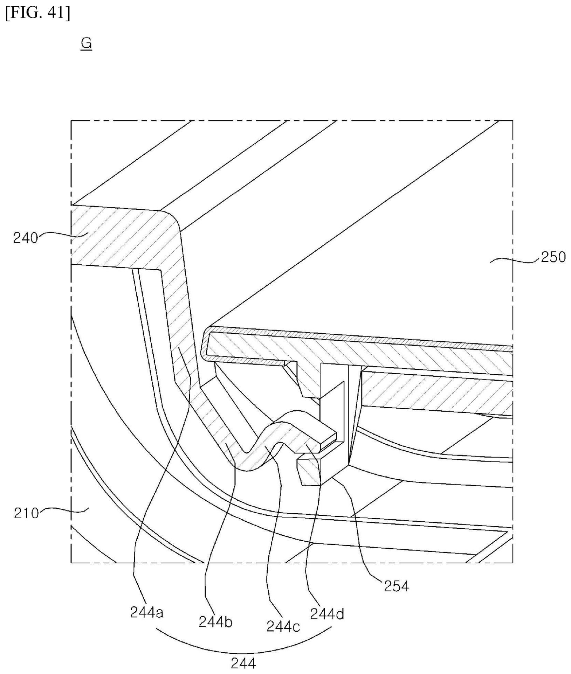

Referring to FIG. 41, the fourth coupling set G may include a moving lever 244 and a lever hole 254. The inner cover 250 may include a lever hole 254, and the moving lever 244 may extend from the middle frame 240. The lever hole 254 may be formed to protrude from the inner surface of the inner cover 240. The moving lever 244 may be inserted into the lever hole 254 of the inner cover 240. The moving lever 244 may include a first part 244a, a second part 244b, a third part 244c, and a fourth part 244d. The first part 244a may protrude from the middle frame 240 and may extend. The second part 244b may be bent and extended from the first part 244a to form a first angle. For example, the first angle may be an obtuse angle. The third part 244c may be bent and extended from the second part 244b to form a second angle. For example, the second angle may be an acute angle. The fourth part 244d may be bent and extended from the third part 244c to form a third angle. For example, the third angle may be larger than the second angle and smaller than the first angle. The fourth part 244d may be engaged with the lever hole 254. A user may insert a tool into between the inner cover 250 and the middle frame 240 and push the first part 244a and/or the second part 244b to separate the moving lever 244 from the lever hole 254.

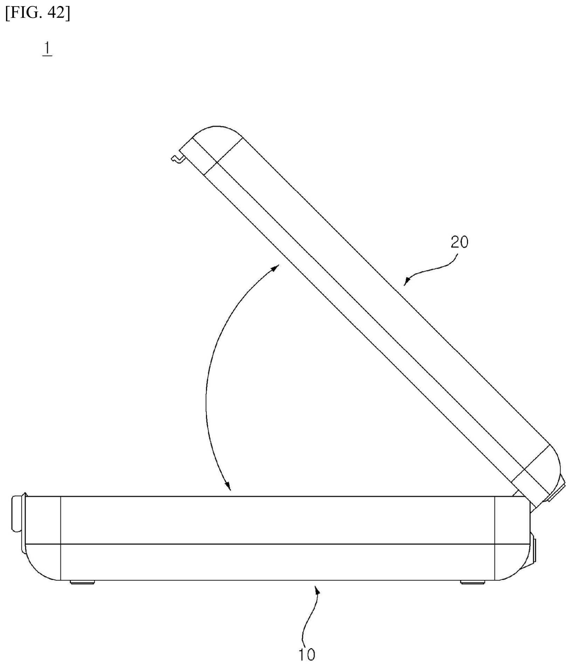

Referring to FIGS. 42 to 44, the locking unit 10a, 10b may include a lower body 110b, an upper body 110c, and a lock lever 110a. The lower body 110b may be coupled to the outer surface of the bottom 11 of the base 10. The lower body 110b may be coupled to or fixed to the frame 12 by a fastening member f. The upper body 110c may be located between the outer cover 210 and the middle frame 240 of the cover 20, and may be coupled to or fixed to the outer cover 210. The upper body 110c may extend long from the cover 20 toward the base 10.

The lower body 110b may include a fixing portion 111 that is in contact with the outer surface of the bottom 11 of the base 10 and is fixed to the frame 12, and a lower rib 112 that is formed to protrude from the upper surface of the fixing portion 111 and faces the upper body 110c.

The upper body 110c may include a fixing portion 116 that is fixed to the outer cover 210 of the cover 20, and an upper hook 117 that extends long from the fixing portion 116, is bent toward the lock lever 110a, and engages the lower rib 112.

The lock lever 110a may include a lever body 113, a locking hook 114, and a pivot shaft 115b to which a pivot pin 115a is coupled. The pivot pin 115a may extend long in the axial direction of a pivot axis. The lock lever 110a may rotate around the pivot pin 115a. The lever body 113 may extend long and may seesaw, pivot, or tilt with respect to the lower body 111. The pivot shaft 115b may connect the lever body 113 of the lock lever 110a to the lower body 110b. The lock lever 110a may pivot, tilt, or seesaw with respect to the lower body 110b around the pivot pin 115a. The locking hook 114 may be formed at the upper end of the lever body 113, and may be bent from the lever body 113 toward the lower body 110b and/or the upper body 110c.

When the cover 20 is closed while covering the base 10, the upper hook 117 of the upper body 110c may be in contact with or engaged with the lower rib 112 of the lower body 110b. As the lock lever 110a rotates around the pivot pin 115a, the locking hook 114 may be engaged with the upper hook 117 of the upper body 110c. Accordingly, the cover 20 may be fixed to the base 10.

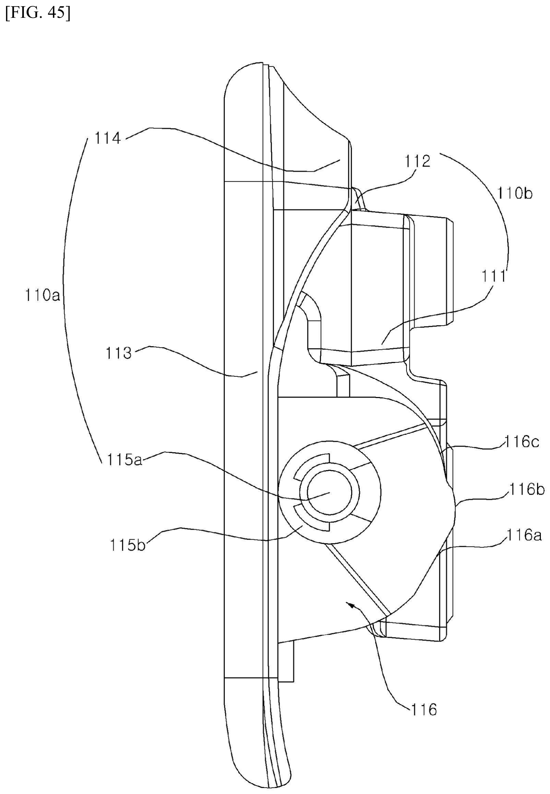

Referring to FIG. 45, the lock lever 110a may include a pivot shaft 115b located between the lever body 113 and the bottom case 10, and a cam 116 extending from the pivot shaft 115b.

The pivot shaft 115b may be connected to the lock lever 110a. The pivot shaft 115b and the lock lever 110a may be formed as one body. The pivot shaft 115b may extend in the axial direction of the pivot axis of the lock lever 110a. The pivot shaft 115b may rotate around the pivot axis RX of the lock lever 110a. The lock lever 110a may be pivoted with the pivot shaft 115b as one body. The pivot shaft 115b may be coupled to the bottom case 10 through the pivot pin 115a. For example, the lock lever 110a may be pin-coupled to the bottom case 10 through the pivot pin 115a penetrating the pivot shaft 115b. The pivot axis of the lock lever 110a may penetrate the pivot pin 115a. That is, the pivot pin 115a may be located on the pivot axis. The pivot axis of the lock lever 110a may be a virtual axis that is the pivot center of the lock lever 110a. The pivot pin 115a and the pivot shaft 115b of the lock lever 110a may refer to a physical device extending in the axial direction of the pivot axis.

The cam 116 may be formed on the lever body 113 around the pivot shaft 115b. The cam 116 may extend in a radial direction from the pivot shaft 115b. The cam 116 may extend along the rotation direction of the pivot axis RX. The cam 116 may be connected to the lever body 113. The cam 116 may be formed with the pivot shaft 115b as one body. For example, the cam 116 may be formed with the lever body 113 and the pivot shaft 115b as one body. Through this, when the pivot shaft 115b rotates, the cam 116 and the lever body 113 can be pivoted together.

When the pivot shaft 115b rotates, the cam 116 may be pivoted while contacting the bottom case 10. The cam 116 may include a ramp 116a, 116b that is in contact with the bottom case 10. The ramp 116a, 116b may be a part of the circumferential surface of the cam 116. The ramp 116a, 116b may refer to an area or outer surface where the pivoted cam 116 is in contact with the bottom case 10. The distance between the ramp 116a, 116b and the pivot axis may vary as the cam 116 pivots. The ramp 116a, 116b may include an opening ramp that moves away from the pivot axis as the locking unit 10a, 10b is unlocked, and a closing ramp that moves away from the pivot axis as the locking unit 10a, 10b is locked. The ramp 116a, 116b may include a nose formed between the opening ramp and the closing ramp. The nose may be the point of the ramp 116a, 116b that has the longest distance from the pivot axis. The nose may protrude in the radial direction from the pivot shaft 115b.

Hereinafter, the distance between the ramp 116a, 116b and the pivot axis may be referred to as a ramp height.

The ramp 116a, 116b may be divided into a first ramp 116b and a second ramp 116a based on the nose.

The first ramp 116b may be in contact with the bottom case 10. The first ramp 116b may be part of ramp 116a, 116b. The first ramp 116b may protrude in the radial direction from the pivot shaft 115b. The first ramp 116b may protrude in a direction opposite to the lever body 113 with respect to the pivot shaft 115b. The first ramp 116b may extend in the rotation direction of the pivot axis. The lock lever 110a engaged with the top case 20 may be in contact with the bottom case 10 through the first ramp 116b.

The second ramp 116a may extend from the first ramp 116b. The second ramp 116a may be part of ramp 116a, 116b. The second ramp 116a may extend in the rotation direction of the pivot axis. For example, the second ramp 116a may extend clockwise from the first ramp 116b. The second ramp 116a of the lock lever 110a engaged with the top case 20 may be spaced apart from the bottom case 10.

The cam 116 may include a first part 116c extending from the ramp 116a, 116b. The first part 116c may extend from the first ramp 116b. The first part 116c may extend in the rotation direction of the pivot axis. The first part 116c may extend from the first ramp 116b toward the lever body 113. The first part 116c may form a step with the first ramp 116b. For example, the first part 116c may extend counterclockwise around the pivot axis while being lowered from the first ramp 116b. The first part 116c may not be in contact with the bottom case 10.

Hereinafter, the first ramp 116b may be referred to as a third part 116b, and the second ramp 116a may be referred to as a second part 116a.

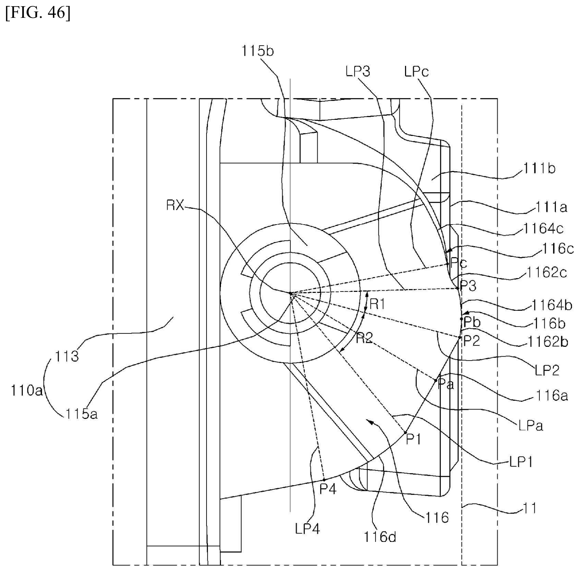

Referring to FIG. 46, the cam 116 will be described with respect to the first and second ramp 116a, 116b contacting the bottom case 10, the first part 116c extending from the first ramp 116b, and the fourth part 116d extended from the second ramp 116a.

The ramp 116a, 116b may include a nose P2 that protrudes in the radial direction from the pivot shaft 115b. The nose P2 may be located between the first ramp 116b and the second ramp 116a. The distance between the nose P2 and the pivot axis RX may be longer than the distance between the first ramp 116b and the pivot axis RX. The distance between the nose P2 and the pivot axis RX may be longer than the distance between the second ramp 116a and the pivot axis RX. For example, the ramp 116a, 116b may include a nose located at a second point P2 between the first ramp 116b and the second ramp 116a. For example, the distance between the second point P2 and the pivot axis RX may be longer than the distance between the first ramp 116b and the pivot axis RX. For example, the distance between the second point P2 and the pivot axis RX may be longer than the distance between the second ramp 116a and the pivot axis RX.

The first ramp 116b may protrude in the radial direction from the pivot shaft 115b. The first ramp 116b may extend in the rotation direction of the pivot axis RX. The first ramp 116b may extend from the nose P2 protruding in the radial direction from the pivot shaft 115b. For example, the first ramp 116b may extend from the nose P2 located at the second point P2 to a third point P3 spaced counterclockwise of the pivot axis RX. That is, the first ramp 116b may be formed between the second point P2 and the third point P3. The distance between the second point P2 and the pivot axis RX may be longer than the distance between the third point P3 and the pivot axis RX. The distance between the first ramp 116b and the pivot axis RX may decrease as the distance from the nose P2 increases. The first ramp 116b may be formed to be convex in the radial direction from the pivot shaft 115b. For example, the first ramp 116b may be a convex curved surface formed on the cam 116.

The lock lever 110a engaged with the top case 20 may be in contact with the bottom case 10 through the first ramp 116b. The first ramp 116b may include a locking point Pb which is a point where the locked lock lever 110a is in contact with the bottom case 10.

The first ramp 116b may be divided into a nose portion 1162b and a protrusion 1164b centered on the locking point Pb. The first ramp 116b may include a nose portion 1162b formed between the locking point Pb and the nose P2. The nose portion 1162b may extend counterclockwise from the nose P2 to the locking point Pb. The nose portion 1162b may be formed as a convex curved surface in the radial direction of the pivot axis RX.

The first ramp 116b may include a protrusion 1164b extending from the locking point Pb. The protrusion 1164b may extend from the nose portion 1162b. For example, the protrusion 1164b may extend from the locking point Pb to the third point P3 in the counterclockwise direction of the pivot axis RX. The protrusion 1164b may be formed as a convex curved surface in the radial direction of the pivot axis RX.

The curvature of the nose portion 1162b may be smaller than the curvature of the protrusion 1164b. That is, the curvature of the convex curved surface formed on the protrusion 1164b is greater than the curvature of the convex curved surface formed on the nose portion 1162b, so that the locking properties of the locking unit 10a, 10b can be improved. The height of the first ramp 116b decreases from the nose P2 to the third point P3, and the rate of decrease in the ramp height in the protrusion 1164b may be greater than the rate of decrease in the ramp height in the nose portion 1162b.

The first part 116c may extend from the first ramp 116b. The first part 116c may extend from the protrusion 1164b. The first part 116c may be a part of the cam 116 extending from the third point P3. The distance between the first part 116c and the pivot axis RX may decrease as the distance from the ramp 116a, 116b increases. The distance between the first part 116c and the pivot axis RX may be referred to as the height of the first part 116c.

The first part 116c may form a step with the first ramp 116b. The step may be a difference in height. The first part 116c and the first ramp 116b may be sharply connected. The first part 116c may include a concave portion 1162c sharply connected to the first ramp 116b. The concave portion 1162c may be formed concave in the direction of the centre of the pivot axis RX. For example, the concave portion 1162c may extend concavely in the counterclockwise direction of the pivot axis RX from the third point P3, and a connection portion between the concave portion 1162c and the first ramp 116b may be formed sharply. The height of the concave portion 1162c may decrease as it moves away from the first ramp 116b.

The first part 116c may include a convex portion 1164c extending from the concave portion 1162c. The convex portion 1164c may smoothly extend from the concave portion 1162c. The first part 116c may include an inflection point Pc located between the convex portion 1164c and the concave portion 1162c. The inflection point Pc may be a point where the concavity and convexity of the first part change. For example, the convex portion 1164c may extend convexly from the inflection point Pc in a counterclockwise direction of the pivot axis RX. The height of the convex portion 1164c may decrease as the distance from the inflection point Pc increases.

The locking unit 10a, 10b may include a stopper 111b that adjusts the pivot angle of the lock lever 110a. The stopper 111b may set the maximum angle of the lock lever 110a. The lock lever 110a may be pivoted until it is in contact with the stopper 111b. The lock lever 110a being in contact with the stopper 111b may no longer pivot. Through this, the stability and durability of the locking structure of the display device can be improved.

The stopper 111b may extend in the axial direction of the pivot axis RX. The stopper 111b may be spaced apart from the first part 116c in the radial direction of the pivot axis RX. A gap may be formed between the stopper 111b and the first part 116c. The stopper 111b may be formed in the lower body 110b. The stopper 111b may protrude from the fixing portion 111 of the lower body 110b in the axial direction of the pivot axis RX of the lock lever 110a. A cam 116 may be located between the stopper 111b and the pivot axis RX. A first part 116c may be located between the stopper 111b and the pivot axis RX. The stopper 111b may be formed in a shape corresponding to the concave portion 1162c.

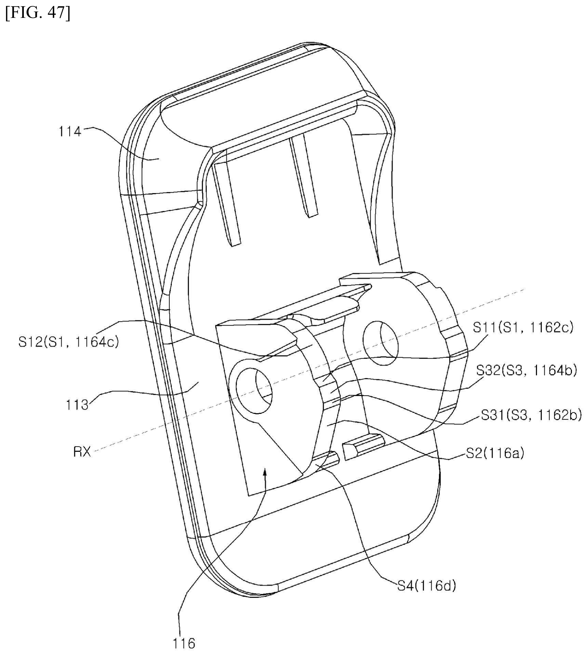

Referring to FIG. 47, it may include a third surface S3 forming the first ramp 116b, a second surface S2 forming the second ramp 116a, a first surface S1 forming the first part 116c, and a fourth surface S4 forming the fourth part 116d.

The third surface S3 may be an outer surface formed on the cam 116. The third surface S3 may be a circumferential surface extending in the circumferential direction of the cam 116. The third surface S3 may correspond to the first ramp 116b. The third surface S3 may be part of the circumferential surface of the cam 116. The third surface S3 may be a convex curved surface formed along the circumference of the cam 116.

The third surface S3 may include a nose surface S31 corresponding to the nose portion 1162b. The nose surface S31 may be a convex curved surface extending along the circumference of the cam 116. The nose surface S31 may be rounded. The nose surface S31 may be formed to be curved.

The third surface S3 may include a protruding surface S32 corresponding to the protrusion 1164b. The protruding surface S32 may extend from the nose surface S31. The protruding surface S32 may be a convex curved surface extending along the circumference of the cam 116. The protruding surface S32 may be rounded. The curvature of the protruding surface S32 may be greater than the curvature of the nose surface S31. The area of the protruding surface S32 may be larger than the area of the nose surface S31.

The second surface S2 may be an outer surface formed on the cam 116. The second surface S2 may be a circumferential surface extending in the circumferential direction of the cam 116. The second surface S2 may be another part of the circumferential surface of the cam 116. The second surface S2 may be a plane formed along the circumference of the cam 116. The second surface S2 may extend flatly from the third surface S3.

The nose P2 may be located between the third surface S3 and the second surface S2. The nose P2 may be a line where the third surface S3 and the second surface S2 meet. The nose P2 may be a line extending in the axial direction of the pivot axis RX at between the third surface S3 and the second surface S2.

The first surface S1 may be an outer surface formed on the cam 116. The first surface S1 may be a circumferential surface extending in the circumferential direction of the cam 116. The first surface S1 may be another part of the circumferential surface of the cam 116. The first surface S1 may be a curved surface formed along the circumference of the cam 116. The first surface S1 may extend convexly from the third surface S3.

The first surface S1 may include a concave surface S11 corresponding to the concave portion 1162c. The concave surface S11 may be a concave curved surface extending along the circumference of the cam 116. The concave surface S11 may be formed to be curved. The boundary where the concave surface S11 and the third surface S3 meet may be formed sharply.

The first surface S1 may include a convex surface S12 corresponding to the convex portion 1164c. The convex surface S12 may be a convex curved surface extending along the circumference of the cam 116. The convex surface S12 may be formed to be curved.

An inflection point Pc may be located between the convex surface S12 and the concave surface S11. The inflection point Pc may be a line where the concave surface S11 and the convex surface S12 meet. The inflection point Pc may be a line that is located between the convex surface S12 and the concave surface S11 and extends in the axial direction of the pivot axis RX.

The cam 116 may include a fourth part 116d extending from the second ramp 116a. The fourth part 116d may extend in a direction opposite to the first part 116c with respect to the ramp 116a, 116b. The first part 116c and the fourth part 116d may be spaced apart from each other.

The fourth surface S4 may be an outer surface formed on the cam 116. The fourth surface S4 may be a circumferential surface extending in the circumferential direction of the cam 116. The fourth surface S4 may be another part of the circumferential surface of the cam 116. The fourth surface S4 may correspond to the fourth part 116d. The fourth surface S4 may be a curved surface formed along the circumference of the cam 116. The fourth surface S4 may extend convexly from the second surface S2.

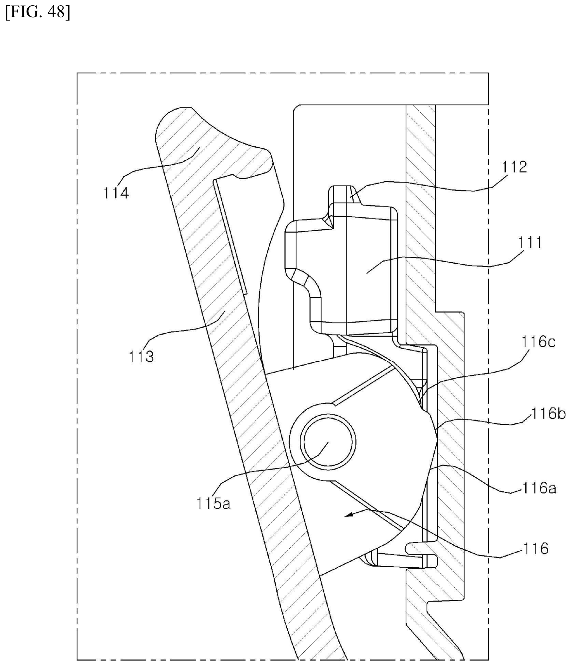

Referring to FIG. 48, the process of unlocking the locking unit 10a, 10b will be described.

The lock lever 110a may be unlocked by being detached from the top case 20. The lock lever 110a may be unlocked by being detached from the upper body 110c. The lock lever 110a may be unlocked when the locking hook 114 is detached from the upper body 110c. A user may unlock the locking unit 10a, 10b by pulling the locking hook 114.

When a user pulls the lock lever 110a, the lock lever 110a may pivot in a direction away from the top case. When a user pulls the lock lever 110a, the lock lever 110a may pivot counterclockwise with respect to the pivot axis RX. As the lock lever 110a pivots, the cam 116 and the pivot shaft 115b may pivot together. As the lock lever pivots, the ramp height may increase. The contact portion of the cam 116 contacting the bottom case 10 may move from the first ramp 116b to the nose P2.

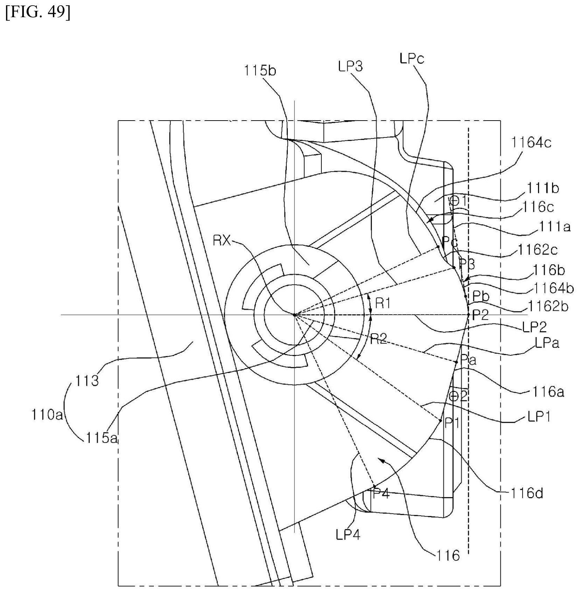

Referring to FIG. 49, when the locking unit 10a, 10b is unlocked, the nose P2 may be in contact with the bottom case 10.

The ramp height may increase as the lock lever 110a rotates counterclockwise. The contact portion of the cam 116 contacting the bottom case 10 may be moved from the locking point Pb to the second point P2 where the nose P2 is located. In this process, the height of ramp may be increased. A user may apply driving force to separate the lock lever 110a from the top case 20.

When the lock lever 110a rotates, the distance between the stopper 111b and the concave portion 1162c may decrease. As the lock lever 110a rotates, the bottom case 10 may contact along the first ramp 116b of the cam 116. A user may rotate the lock lever 110a by a first pivot angle R1 to release it from a locked state. The first pivot angle R1 may be an angle at which the first ramp 116b extends in the rotation direction of the pivot axis RX.

The tangent line of the nose P2 and the first ramp 116b may form an angle. The tangent line of the nose P2 may be a straight line that is perpendicular to the straight line connecting the pivot axis RX and the nose P2 and is in contact with the nose P2. For example, the tangent line of the nose P2 and the nose portion 1162b may form a first angle (theta 1). Through this, the locking holding force of the locking unit may be formed.

The tangent line of the nose P2 and the second ramp 116a may form an angle. For example, the tangent line of the nose P2 and the second ramp 116a may form a second angle (theta 2).

The second angle (theta 2) formed by the tangent line of the nose P2 and the second ramp 116a may be greater than the first angle (theta 1) formed by the tangent line of the nose P2 and the first ramp 116b.

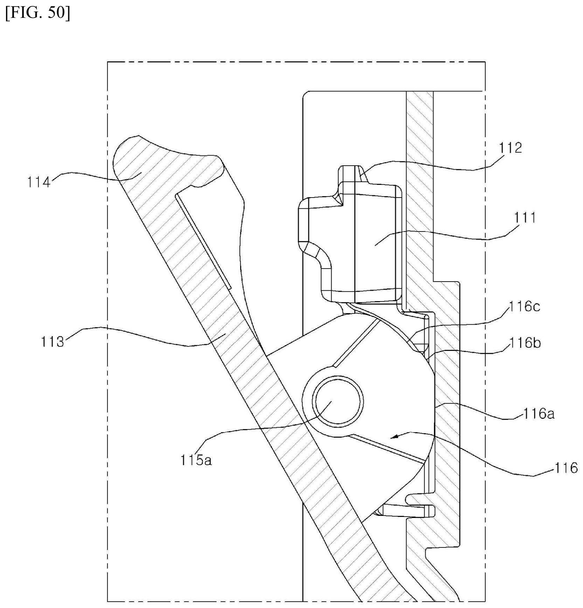

Referring to FIG. 50, the unlocked state of the locking unit will be described.

When the lock lever 110a is completely pulled out from the top case 20, the locking unit 10a, 10b may be in an unlocked state. When a user fully pulls the lock lever 110a, the locking unit 10a, 10b may be pivoted to the maximum angle. At this time, the stopper 111b may be in contact with the concave portion 1162c of the cam 116. The stopper 111b in contact with the concave portion 1162c may resist the force by which a user pulls the lock lever 110a. Through this, the stopper 111b may form the maximum angle of the lock lever 110a.

When the lock lever 110a is fully pulled, the cam 116 may contact the bottom case 10 through the second ramp 116a. At this time, the portion of the cam 116 in contact with the bottom case 10 may be moved from the nose P2 to the second ramp 116a. The straight surface of the second ramp 116a may be in close contact with the bottom case 10. Since the second ramp 116a is formed as a straight surface, the locking unit 10a, 10b may form a holding force in the unlocked state.

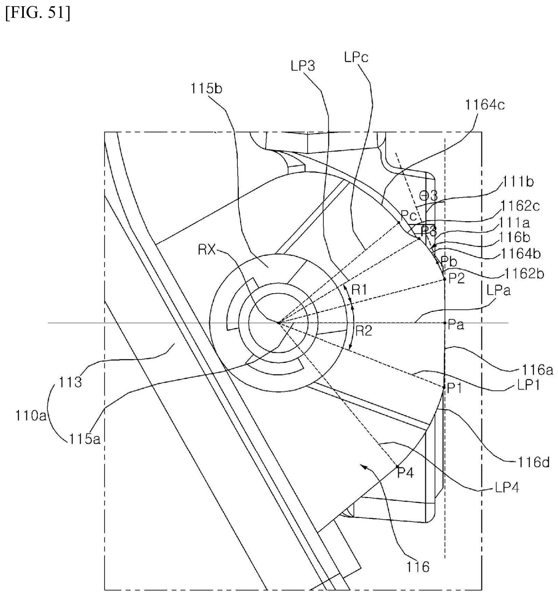

Referring to FIG. 51, when the locking unit 10a, 10b is unlocked, the second ramp 116a may be in contact with the bottom case 10.

As the portion of the cam 116 in contact with the bottom case 10 moves from the nose P2 to the second ramp 116a, the height of the ramp 116a, 116b may gradually decrease. Since the direction in which the lock lever 110a rotates and the direction in which the height of the ramp 116a, 116b is gradually lowered are parallel, the lock lever 110a passed the nose P2 may automatically enter the unlocked state.

The second ramp 116a may include an un-locking point Pa at which the fully pulled lock lever 110a contacts the bottom case 10. The un-locking point Pa may be a point at which the ramp height is lowest among the second ramp 116a. That is, the ramp height at the un-locking point Pa may be smaller than the ramp height at the rest of the second ramp 116a.

The ramp height at the un-locking point Pa may be lower than the ramp height at the locking point Pb. The difference between the ramp height at the un-locking point Pa and the ramp height at the nose P2 may be greater than the difference between the ramp height at the locking point Pb and the ramp height at the nose P2. Through this, the holding power of the locking unit in the unlocked state can be improved. In addition, the driving force that must be applied by a user when the locking unit is in a locked state may be reduced. Through this, the ease of use of the locking unit can be improved.

The fourth part 116d may extend from the second ramp 116a. The fourth part 116d may extend from a first point P1 of the second ramp 116a. The first point P1 of the second ramp 116a may be one end opposite to the second point P2 with respect to the un-locking point Pa. For example, the first point P1 may be one end of the second ramp 116a, and the second point P2 may be the other end of the second ramp 116a. The fourth part 116d may extend clockwise about the pivot axis from the first point P1 of the second ramp 116a. At this time, the distance between the fourth part 116d and the pivot axis may be longer than the height of the second ramp 116a. Through this, in order to move the contact portion of the cam 116 from the unlocking point (Pa), where the ramp height is lowest, to the fourth part 116d, an additional driving force from a user may be required. That is, the lock lever 110a that is in contact with the bottom case 10 through the second ramp 116a may form a holding power of unlocked state.

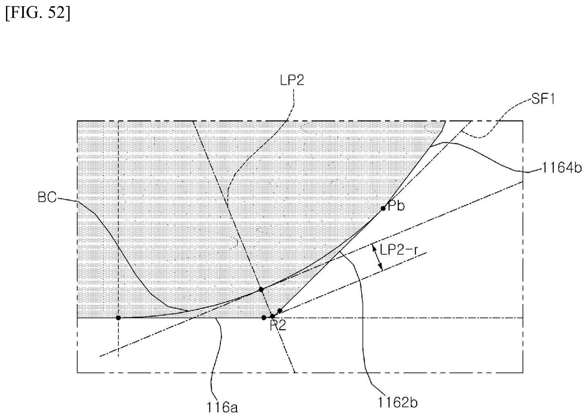

Referring to FIG. 52, the nose P2 may protrude from the ramp 116a, 116b in the radial direction of the pivot axis RX.

The ramp 116a, 116b may include a first ramp 116b extending from the nose P2 in one rotation direction of the pivot axis RX, and a second ramp 116a extending in the other rotation direction of the pivot axis RX. The first ramp 116b and the second ramp 116a may be connected at the nose P2. The first ramp 116b and the second ramp 116a may be sharply connected at the nose P2. For example, the ramp 116a, 116b may include a first ramp 116b extending counterclockwise of the pivot axis RX from the nose P2 and a second ramp 116a extending clockwise of the pivot axis RX, and the first ramp 116b and the second ramp 116a may be sharply connected at the nose P2.

The first ramp 116b and the second ramp 116a may form an angle. That is, the first ramp 116b and the second ramp 116a may be connected to form an angle at the nose P2. The second ramp 116a, which has a flat straight surface, and the first ramp 116b, which has a curved surface, may be connected to form an angle at the nose P2. For example, a virtual second plane SF2 extending from the second ramp 116a and the first ramp 116b connected to the nose P2 may form a third angle (theta 3).

The first ramp 116b may include a nose portion 1162b and a protrusion 1164b. A locking point Pb may be located between the nose portion 1162b and the protrusion 1164b. The slope of the first ramp 116b connected to the nose P2 may be a slope of a virtual straight line connecting the second point P2 where the nose P2 is located and the locking point Pb. For example, a virtual straight line SF1 connecting the second point P2 and the locking point Pb and the virtual second straight line SF2 extending from the second ramp 116a may form a third angle (theta 3).

The third angle (theta 3) formed by the first ramp 116b and the second ramp 116a that meet at the nose P2 may be 20 degrees or more. For example, the virtual straight line SF1 connecting the second point P2 and the locking point Pb and the virtual second straight line SF2 extending from the second ramp 116a may form a third angle (theta 3) of 25 degrees or more.

The cam 116 may include a base circle BC inscribed in the ramp 116a, 116b. The base circle BC may form the basic shape of the cam 116. In the base circle BC, when the cam 116 rotates, the distance between the counterpart bottom case 10 and the pivot axis RX of the cam 116 may not change. The ramp 116a, 116b may be spaced apart from the base circle BC of the cam 116 in a radial direction. The base circle BC of the cam 116 may have a base circle radius r forming a radius.

The protrusion amount of the cam 116 may be an amount by which the nose P2 protrudes from the pivot axis RX with respect to a radius of the base circle. For example, the protrusion amount of the cam 116 may be a value (LP2 - r) obtained by subtracting the radius r of the base circle from the distance LP2 between the second point P2 and the pivot axis RX. As the amount by which the nose P2 protrudes from the cam 116 increases, the protrusion amount of the cam 116 may increase. Conversely, as the amount by which the nose P2 protrudes from the cam 116 decreases, the protrusion amount of the cam 116 may decrease.

The protrusion ratio of the cam 116 may be the protrusion amount of the cam 116 with respect to the radius of the base circle BC. That is, it may be a value obtained by dividing the protrusion amount of the cam 116 by the radius of the base circle BC. As the protrusion ratio of the cam 116 increases, the locking force of the cam 116 may increase. The protrusion ratio of the cam 116 may be 0.02 or more. For example, the protrusion ratio of the cam 116 may be 0.024 or more. The protrusion ratio of the cam 116 may be formed within the range of 0.02 to 0.08. For example, the protrusion ratio of the cam 116 may be formed within the range of 0.03 to 0.071. Through this, it is possible to provide a locking structure that satisfies both ease of use and locking properties.

Referring to FIGS. 1 to 52, a display device may include: a bottom case which accommodates a display panel; a top case which opens or closes the bottom case; and a locking unit which is pivotally connected to the bottom case, and which includes a lock lever engaged with or disengaged from the top case, in which the locking unit may include a cam which provides a pivot axis of the lock lever at between the bottom case and the lock lever, which extends in a radial direction of the pivot axis, and which is in contact with the bottom case, in which the cam may include: a first surface which is located between the pivot axis and the top case, and which forms a curved surface; a second surface which is opposite to the first surface with respect to the pivot axis, and which forms a straight surface; and a third surface which is located between the first surface and the second surface, which forms a curved surface from the second surface, and which forms a step raised with respect to the first surface.

The first surface may include a concave portion which is connected to the third surface, and which is recessed to form the step.

The first surface may include a convex portion which extends from the concave portion, and which is inflected to form a convex curved surface.

The display device may further include a stopper which is spaced apart from the first surface in the radial direction of the pivot axis, and which extends in an axial direction of the pivot axis, in which the stopper may be in contact with the concave portion of the locking unit detached from the top case.

The cam may include a fourth surface which extends from the second surface toward the lock lever, and which forms a curved surface, in which a distance between the fourth surface and the pivot axis may become longer as it moves away from the second surface.

The third surface and the fourth surface may be formed convexly in the radial direction of the pivot axis, and a curvature of the third surface may be greater than a curvature of the fourth surface.

The third surface may include a locking point at which the locking unit engaged with the top case is in contact with the bottom case, in which the second surface may include an un-locking point which is a point where a distance from the pivot axis is the shortest, in which a distance between the locking point and the pivot axis may be longer than a distance between the unlocking point and the pivot axis.

The cam may include a nose located between the third surface and the second surface, in which a distance between the third surface and the pivot axis may gradually decrease from the nose to the locking point.

A tangent line at the nose and the third surface may form an angle.

The angle formed by the tangent line at the nose and the third surface may be smaller than an angle formed by the tangent line at the nose and the second surface.

The third surface may include a nose surface extending as a convex curved surface from the nose, and a protruding surface extending from the nose surface, in which a curvature of the protruding surface may be greater than a curvature of the nose surface.

In the second surface, a distance from the pivot axis may decrease and then increase as a distance from the third surface increases.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

The foregoing embodiments are merely examples and are not to be considered as limiting the present disclosure. The scope of the present disclosure should be determined by rational interpretation of the appended claims, and all modifications within the equivalents of the disclosure are intended to be included within the scope of the present disclosure.

## Claims

1. A display device comprising:
a bottom case which accommodates a display panel;
a top case which opens or closes the bottom case; and
a locking unit which is pivotally connected to the bottom case, and which includes a lock lever engaged with or disengaged from the top case,
wherein the locking unit comprises a cam which provides a pivot axis of the lock lever between the bottom case and the lock lever, which extends in a radial direction of the pivot axis, and which is in contact with the bottom case,
wherein the cam comprises:
a first surface which is located between the pivot axis and the top case, and which forms a curved surface;
a second surface which is opposite to the first surface with respect to the pivot axis, and which forms a straight surface; and
a third surface which is located between the first surface and the second surface, which forms a curved surface from the second surface, and which forms a step raised with respect to the first surface.

2. The display device of claim 1, wherein the first surface comprises a concave portion which is connected to the third surface, and which is recessed to form the step.

3. The display device of claim 2, wherein the first surface comprises a convex portion which extends from the concave portion, and which is inflected to form a convex curved surface.

4. The display device of claim 2, further comprising a stopper which is spaced apart from the first surface in the radial direction of the pivot axis, and which extends in an axial direction of the pivot axis, wherein the stopper is in contact with the concave portion of the locking unit detached from the top case.

5. The display device of claim 1, wherein the cam comprises a fourth surface which extends from the
second surface toward the lock lever, and which forms a curved surface,
wherein a distance between the fourth surface and the pivot axis becomes longer as it moves away from the second surface.

6. The display device of claim 5, wherein the third surface and the fourth surface are formed convexly in
the radial direction of the pivot axis, and
a curvature of the third surface is greater than a curvature of the fourth surface.

7. The display device of claim 1, wherein the third surface comprises:
a locking point at which the locking unit engaged with the top case is in contact with the bottom case, wherein the second surface comprises an un-locking point which is a point where a distance from the pivot axis is the shortest,
wherein a distance between the locking point and the pivot axis is longer than a distance between the unlocking point and the pivot axis.

8. The display device of claim 7, wherein the cam comprises a nose located between the third surface and the second surface,
wherein a distance between the third surface and the pivot axis gradually decreases from the nose to the locking point.

9. The display device of claim 1, wherein a tangent line at the nose and the third surface form an angle.

10. The display device of claim 9, wherein the angle formed by the tangent line at the nose and the third surface is smaller than an angle formed by the tangent line at the nose and the second surface.

11. The display device of claim 8, wherein the third surface comprises a nose surface extending as a convex curved surface from the nose, and a protruding surface extending from the nose surface, wherein a curvature of the protruding surface is greater than a curvature of the nose surface.

12. The display device of claim 1, wherein, in the second surface, a distance from the pivot axis decreases and then increases as a distance from the third surface increases.
